(19) Europäisches Patentamt
European Patent Office
Office européen des brevets

(11) **EP 2 555 196 A1**

(12) **EUROPEAN PATENT APPLICATION**
published in accordance with Art. 153(4) EPC

(43) Date of publication:
06.02.2013 Bulletin 2013/06

(21) Application number: 11765466.5

(22) Date of filing: 26.03.2011

(51) Int Cl.:
*G11B 7/135* (2012.01)   *G11B 7/09* (2006.01)
*G11B 7/125* (2012.01)

(86) International application number:
**PCT/JP2011/057484**

(87) International publication number:
**WO 2011/125565 (13.10.2011 Gazette 2011/41)**

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 25.11.2010   JP 2010262134
02.04.2010   JP 2010086177

(71) Applicant: Sony Corporation
Tokyo 108-0075 (JP)

(72) Inventors:
• MIYAMOTO Hirotaka
  Tokyo 108-0075 (JP)
• SAITO Kimihiro
  Tokyo 108-0075 (JP)
• TANABE Norihiro
  Tokyo 108-0075 (JP)

(74) Representative: Turner, James Arthur
D Young & Co LLP
120 Holborn
London EC1N 2DY (GB)

(54) **OPTICAL PICKUP, OPTICAL DRIVE DEVICE, LIGHT IRRADIATION METHOD**

(57) The present invention relates to an optical pick, an optical drive device, and a light irradiation method capable of suppressing a generated amount of shift Δx of a spot position.

The optical pickup irradiates an optical recording medium through a common objective lens which irradiates a first light for use in information recording in or information reproduction from a recording layer and a second light different from the first light, the optical recording medium includes a reference surface having a reflection film in which a position director is formed in a spiral form or the like form, and the recording layer which is provided in a layer position different from the reference surface and in which a mark corresponding to irradiation of light is formed and hence information is recorded. The optical pickup adjusts a focusing position of the first light having passed through the objective lens by changing collimation of the first light entering the objective lens, thereby suppressing the shift Δx of a spot position between the first light and the second light which occurs due to the eccentricity of the optical recording medium. A magnification of the second light is within a magnification range of the first light.

*FIG. 2*

**Description**

TECHNICAL FIELD

The present invention relates to an optical pickup that irradiates an optical recording medium with a first light for information recording in or information reproduction from a recording layer and a second light different from the first light through a common objective lens, and adjusts a focusing position of the first light having passed through the objective lens by changing collimation of the first light entering the objective lens, the optical recording medium including a reference surface provided with a reflection film in which a position director is formed in a spiral form or a concentric circular form, and the recording layer which is formed in a layer position different from the reference surface and in which marks are formed in accordance with irradiation of light and hence information is recorded. Moreover, the present invention relates to an optical drive device including such an optical pick-up, and a light irradiation method.

CITATION LIST

PATENT DOCUMENT

Patent Document 1: Japanese Patent Application Laid-Open No. 2008-135144
Patent Document 2: Japanese Patent Application Laid-Open No. 2008-176902

BACKGROUND ART

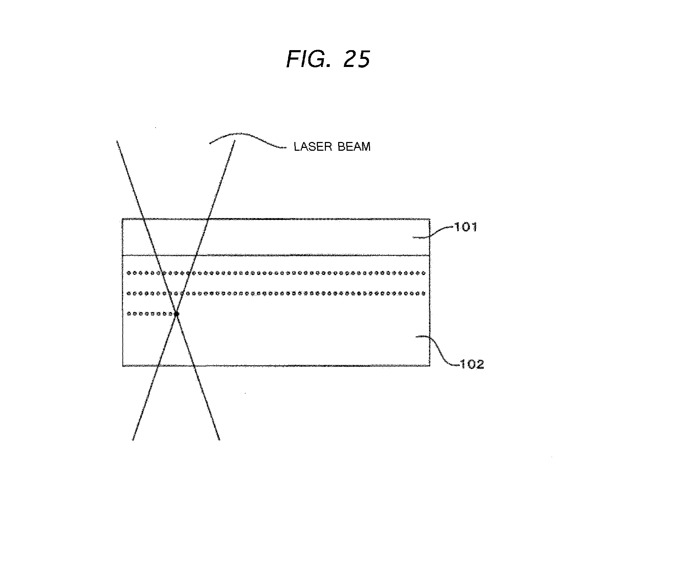

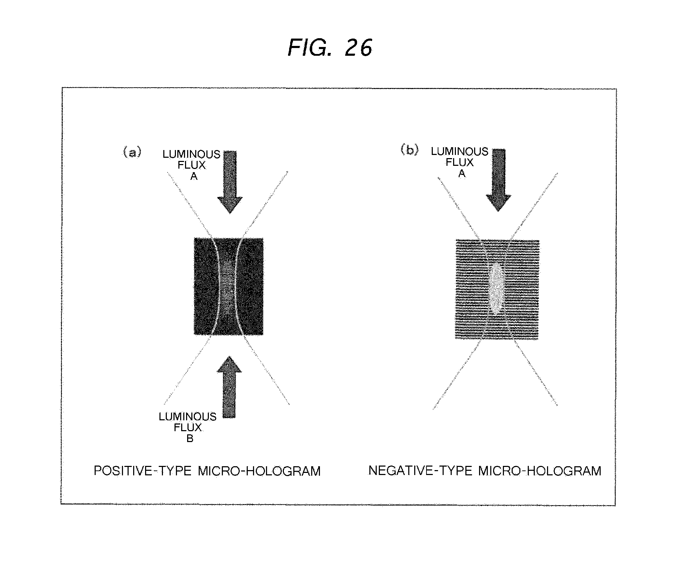

As an optical recording medium on which recording and reproduction of signals are performed by irradiation of light, for example, a so-called optical disc such as CD (Compact Disc), DVD (Digital Versatile Disc), and BD (Blu-ray Disc: registered trademark) has been widespread.
As for an optical recording medium to be the next generation of the currently widespread optical recording medium such as a CD, a DVD, and a BD, the applicant of the present application has proposed so-called bulk recording type optical recording media as described in Patent Document 1 and Patent Document 2.
Here, the bulk recording is a technology that carries out multilayer recording in a bulk layer 102 in a manner of, for example as illustrated in Fig. 25, irradiating an optical recording medium (a bulk-type recording medium 100), which at least includes a cover layer 101 and the bulk layer (recording layer) 102, with a laser beam, while sequentially changing a focal position, thereby attempting to achieve an increase in recording capacity.
In connection with such bulk recording, Patent Document 1 describes a recording technology that is called a micro-hologram system.
The micro-hologram system is broadly divided into a positive type micro-hologram system and a negative type micro-hologram system as illustrated in Fig. 26 to be described later.
In the micro-hologram system, a so-called holographic recording material is used as a recording material of the bulk layer 102. As the holographic recording material, for example, a photopolymerizable type photopolymer and the like are widely known.
As illustrated in Fig. 26 (a), the positive type micro-hologram system is a technique of forming a fine interference fringe (hologram) by condensing two opposed luminous fluxes (a luminous flux A and a luminous flux B) at the same position, and using this fringe as a recorded mark.
Moreover, the negative type micro-hologram system illustrated in Fig. 26 (b) is based on an idea contrary to the positive type micro-hologram system. That is, it is a technique of erasing an interference fringe which has been formed beforehand by irradiation of a laser beam and using the erased portion as a recorded mark.

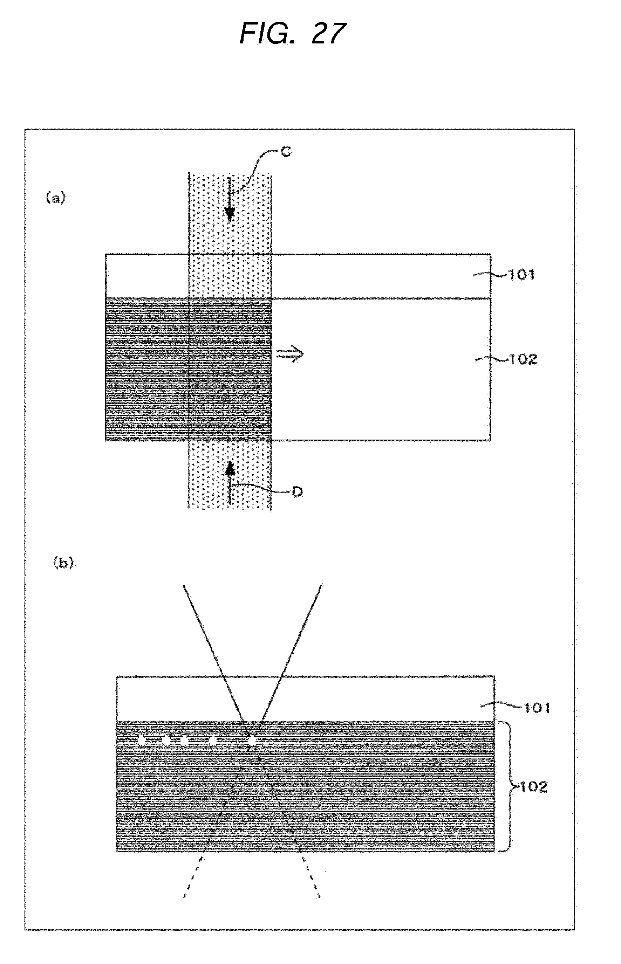

Fig. 27 is a diagram to describe the negative type micro-hologram system.
In this negative type micro-hologram system, an initialization process to form an interference fringe in the bulk layer 102 needs to be performed in advance as illustrated in Fig. 27(a), before performing a recording operation. Specifically, as illustrated in the figure, a luminous flux C and a luminous flux D originating in parallel light are irradiated to be opposed to each other, and an interference fringe of those luminous fluxes is formed over the whole area of bulk layer 102.
After the interference fringe is formed through the initialization process, information is recorded by forming deletion marks as illustrated in Fig. 27(b). Specifically, a laser beam is irradiated in accordance with recording information in a state in which the laser beam is focused on a certain layer position. As a result, information is recorded in the form of deletion marks.
Moreover, as another bulk recording technique different from the micro-hologram system, the applicant of the present application also has proposed a recording technique of forming, for example, voids (holes) as recorded marks as described in Patent Document 2.

The void recording system is a technique of recording holes (voids) in the bulk layer 102 by subjecting the bulk layer 102 formed of a recording material, such as a photopolymerizable polymer or the like to laser irradiation with a relatively high power. As described in Patent Document 2, the hole portion formed in this way is a portion having a refractive index different from those of other portions in the bulk layer 102 and thus light reflectance at the boundary between them may be increased. Therefore, the hole portion functions as a record mark, and this implements information recording through formation of a blank mark.

In such a void recording system, a hologram is not formed and thus recording may be accomplished by optical irradiation only from one side. That is, it is not necessary to condense two luminous fluxes at the same position to form the recorded mark, unlike the positive type micro-hologram system.

Moreover, it is advantageous over the negative micro-hologram system in that the initialization process is unnecessary. Patent Document 2 describes an example in which optical irradiation for pre-curing is performed before recording when void recording is carried out, but the void recording can be achieved even without light irradiation for pre-curing.

Incidentally, although various kinds of recording techniques as described above have been proposed for the optical disc recording medium of the bulk recording type (simply referred to as bulk type), the recording layer (bulk layer) of such a bulk-type optical disc recording medium cannot be said to have an explicit multi-layered structure in a sense that a plurality of reflection films is not formed. That is, in the bulk layer 102, neither a reflection film for each recording layer as in an ordinary multilayer disc, nor a guiding groove is provided.

Therefore, with use of only the structure of the bulk-type recording medium 100 illustrated in Fig. 25 as it is, focus servo or tracking servo may not be performed at the time of recording in which a mark is not yet to be formed.

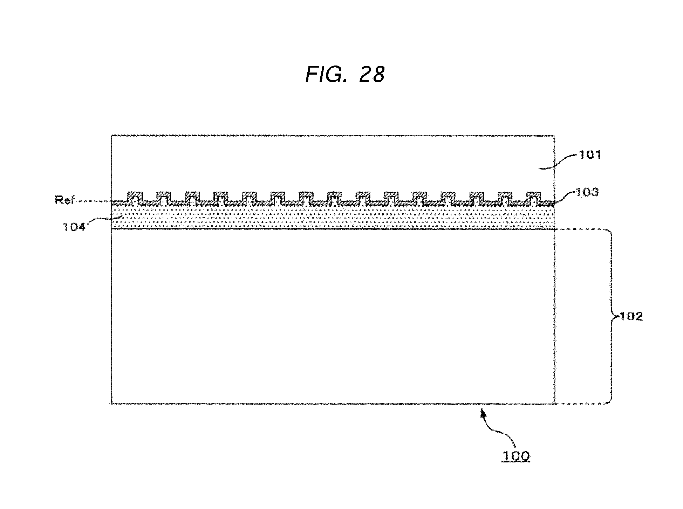

Therefore, in actual practice, the bulk-type recording medium 100 is provided with a reflection surface (reference surface) having a guiding groove and serving as a reference as illustrated Fig. 28.

Specifically, a guiding groove (position director) is formed as pits or a groove formed in a spiral form or a concentric circular form, for example, on an underside surface of a cover layer 101, and a selective reflection film 103 is deposited thereon. Subsequently, on a lower side of the cover layer 102 where the selective reflection film 103 is thus formed, the bulk layer 102 is laminated with an adhesion material such as a UV-curing resin or the like serving as an intermediate layer 104, in the figure, interposed therebetween.

Here, absolute position information (address data), such as radius position information or rotation angle information for example is recorded by forming the guiding groove in the form of pits or a groove as described above. In the following description, a surface in which the guiding groove is formed, that is, in the absolute position information is recorded (in this case, a surface in which the selective reflection film 103 is formed) will be referred to as "reference surface Ref".

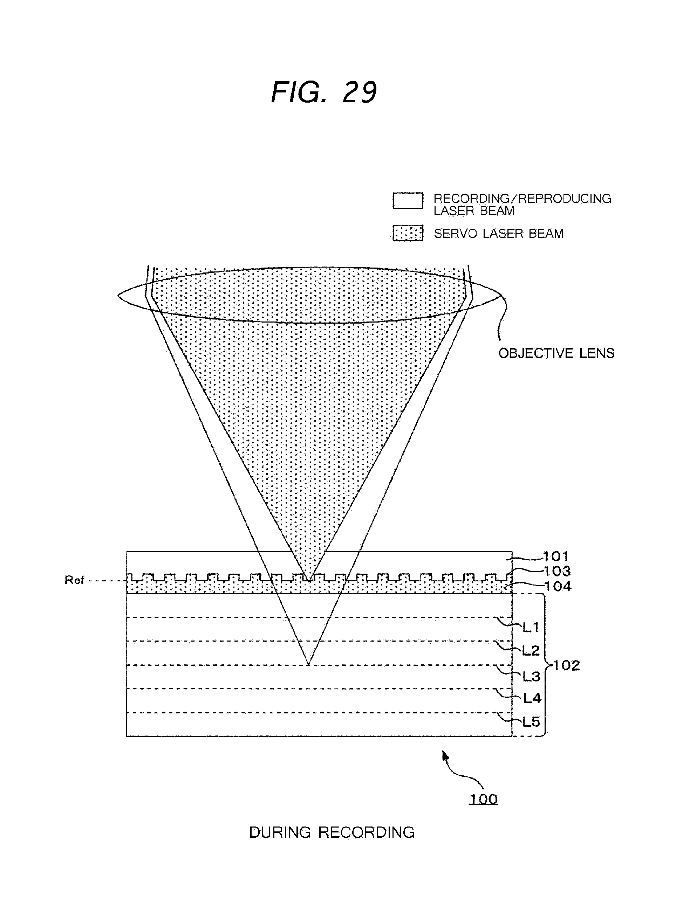

Moreover, based on the above-described medium structure, the bulk-type recording medium 100 is irradiated with a servo laser beam (may also be simply referred to as a servo beam) serving as a laser beam for position control, aside from a mark-recording (or reproducing) laser beam (hereinafter, may also be referred to as a recording/reproducing laser beam, or simply referred to as recording/reproducing light) as illustrated in Fig. 29.

As illustrated in the figure, the bulk-type recording medium 100 is irradiated with the recording/reproducing laser beam and the servo laser beam through a common objective lens.

In this case, if the servo laser beam reaches the bulk layer 102, there is a concern that it negatively affects the mark recording in the bulk layer 102. For this reason, conventionally, in the bulk recording system, a laser beam of a wavelength band different from that of the recording/reproducing laser beam is used as the servo laser beam, and a selective reflection film 103 having wavelength selectivity of reflecting the servo laser beam but transmitting the recording/reproducing laser beam is provided as the reflection film formed on the reference surface Ref.

Based on the above-described premise, an operation at the time of recording a mark in a bulk-type recording medium 100 will be described with reference to Fig. 29.

First, when multi-layer recording is to be performed on the bulk layer 102 with neither the guiding groove nor the reflection film being formed, which position in a depth direction of the bulk layer 102 will be a layer position for recording a mark is determined beforehand. As for the layer position (referred to as mark formation layer position: also referred to as information recording layer position), in which the mark is to be formed, in the bulk layer 102 in the figure, the description is made, by way of example, in connection with a case in which five information recording layer positions L in total, from a first information recording layer position L1 to a fifth information recording layer position L5, are set. As illustrated in the figure, the first information recording layer position L1 is an information recording layer position L set for the uppermost layer, and the layers thereunder are set as information recording layer positions L2 → L3 → L4 → L5, respectively in this order.

At the time of recording in which a mark is yet to be formed, it is difficult to perform focus servo and tracking servo on each of the layer positions in the bulk layer 102, based on the reflected light of the recording/reproducing laser beam. Therefore, focus servo control and tracking servo control of the objective lens at the time of recording are performed based on the reflected light of the servo laser beam, by making the spot position of the servo laser beam follow the guiding groove in the reference surface Ref.

However, the recording/reproducing laser beam is required to reach the bulk layer 102 formed on a lower layer side of the reference surface Ref for mark recording and a focusing position in the bulk layer 102 can be selected. Therefore, an optical system used in this case is provided with a recording/reproducing light focus mechanism to independently adjust the focusing position of the recording/reproducing laser beam, in addition to the objective lens focus mechanism.

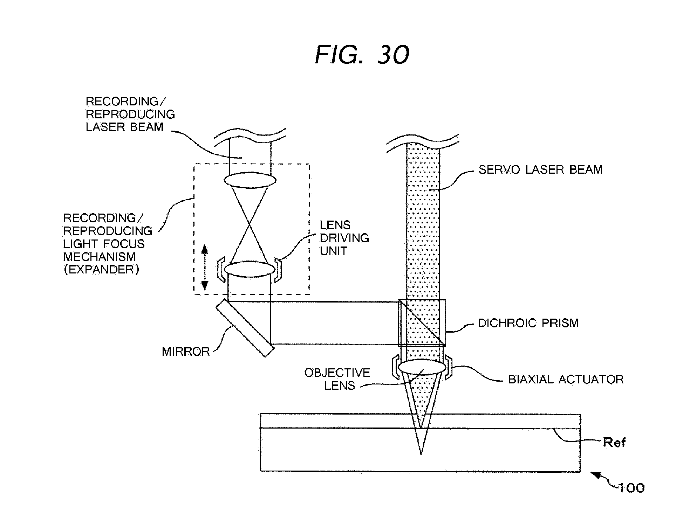

Here, Fig. 30 illustrates the outline of an optical system to perform recording and reproduction in the bulk-type recording medium 100 including the mechanism that independently adjusts the focusing position of the recording/reproducing laser beam.

In Fig. 30, the objective lens illustrated in Fig. 29 is installed such that it can be displaced in a radial direction (tracking direction) of the bulk-type recording medium 100 and a direction (focus direction) of moving closer to and away from the bulk-type recording medium 100 by the operation of a biaxial actuator.

In Fig. 30, the mechanism for independently adjusting the focusing position of the recording/reproducing laser beam corresponds to the recording/reproducing light focus mechanism (expander) in the figure. Specifically, this recording/reproducing light focus mechanism is represented by a structure that includes a fixed lens, and a movable lens held in a manner to be displaced in a direction parallel to an optical axis of the recording/reproducing laser beam by a lens driving unit. By moving the movable lens by the lens driving unit, the collimation of the recording/reproducing laser beam entering the objective lens in the figure is changed, and as a result the focusing position of the recording/reproducing laser beam is adjusted independently of that of the servo laser beam.

Moreover, since the recording/reproducing laser beam and the servo laser beam are assumed to be in different wavelength bands, in the optical system used for this case, the reflected light of the recording/reproducing laser beam and the reflected light of the servo laser beam reflected from the bulk-type recording medium 100 are set to be separately incident on different systems, respectively by a dichroic prism illustrated in the figure. That is, detection of each of reflected lights is independently performed.

Moreover, when taking outward light into consideration, the dichroic prism has a function of synthesizing the recording/reproducing laser beam and the servo laser beam on the same axis and causing the synthesized laser beam to enter the objective lens. Specifically, for this case, the recording/reproducing laser beam is reflected by a mirror with the expander interposed therebetween as illustrated, and is then reflected from a selective reflection surface of the dichroic prism. Thereafter, it enters the objective lens. On the other hand, the servo laser beam passes through the selective reflection surface of the dichroic prism and enters the objective lens.

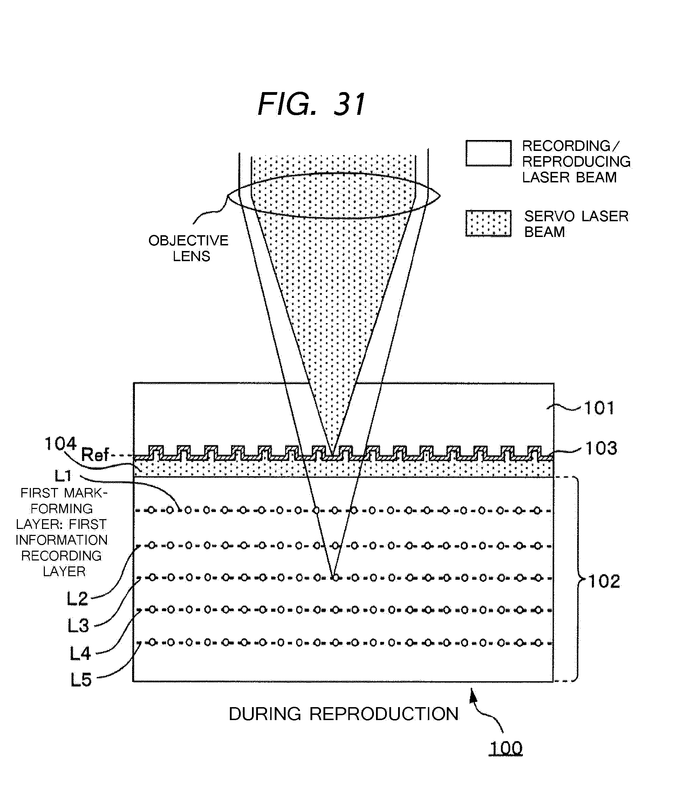

Fig. 31 is a diagram to describe servo control at the time of reproduction of the bulk-type recording medium 100. When reproduction from the bulk-type recording medium 100 with marks having been recorded is performed, the position of the objective lens may not be necessarily controlled based on the reflected light of the servo laser beam, unlike when the recording is performed. That is, at the time of reproduction, only the focus servo control and the tracking servo control of the objective lens may be performed based on the reflected light of the recording/reproducing laser beam, by targeting a mark train formed in the information recording layer position L (may also be referred to as an information recording layer L or a mark forming layer L at the time of reproduction) which is a target of the reproduction.

In this way, in the bulk recording system, based on the structure in which the recording/reproducing laser beam for mark recording and mark reproduction and the servo laser beam serving as light for position control are irradiated (after being synthesized on the same optical axis) to the bulk-type recording medium 100 through the common objective lens at the time of recording, the focus servo control and tracking servo control of the objective lens are performed such that the servo laser beam follows the position director in the reference surface Ref, and the focusing position of the recording/reproducing laser beam is separately adjusted by the recording/reproducing light focus mechanism. Therefore, even without the guiding groove being formed in the bulk layer 102, mark recording at a required position (in a depth direction and a tracking direction) in the bulk layer 102 can be achieved.

On the other hand, at the time of reproduction, the focus servo control and tracking servo control of the objective lens are performed based on the reflected light of the recording/reproducing laser beam such that the focal position of the recording/reproducing laser beam follows the mark train which has been recorded beforehand. In this way, the reproduction of the marks recorded in the bulk layer 102 can be performed.

SUMMARY OF THE INVENTION

PROBLEMS TO BE SOLVED BY THE INVENTION

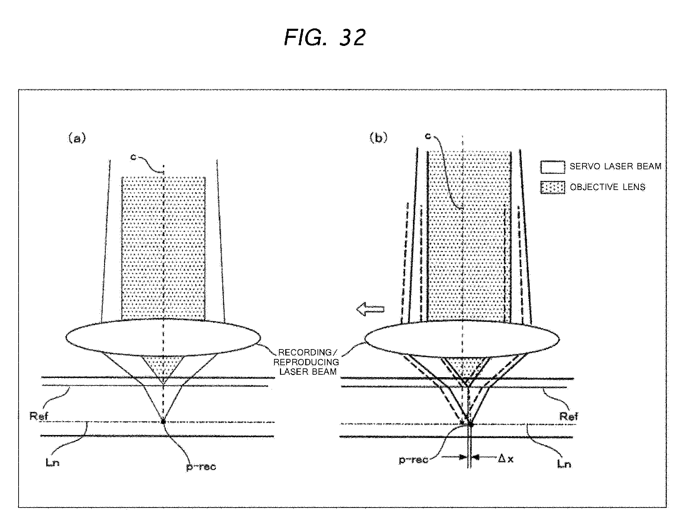

However, when a structure is adopted which adjusts the focusing positions of the recording/reproducing laser beam and the servo laser beam irradiated through the common objective lens as described above to respectively different positions in a focus direction, a problem arises in that, as illustrated in Fig. 32, the information recording position shifts from an original target position in the tracking direction because of the eccentricity of the bulk-type recording medium 100.

Fig. 32 (a) illustrates a relation among a position of the objective lens, a position of the reference surface Ref, an information recording layer position Ln serving as a recording target position, and an information recording position p-rec (the focusing position of the recording/reproducing laser beam), in an ideal state in which no eccentricity has occurred in the bulk-type recording medium 100 and Fig. 32(b) illustrates a relation among the respective positions when the eccentricity has occurred.

First, in the state in which no eccentricity has occurred as illustrated in Fig. 32(a), there is no shift of the objective lens and hence the objective lens stays at the reference position (for example, the state in which the center of the objective lens agrees with an optical axis c of each laser beam entering the objective lens). The optical system is designed such that spot positions of respective laser beams agree with each other in the tracking direction in a state in which the objective lens stays at the reference position.

On the other hand, when the spot position is changed so as to follow the eccentricity of the disc by the tracking servo control as illustrated in Fig. 32 (b) and as a result the objective lens is shifted from the reference position (in this case, shifted to the left in the paper surface), a shift Δx of a spot position illustrated in the figure is generated.

The shift Δx of a spot position due to the lens shift is attributable to a difference in behavior of incident light on the objective lens between the servo laser beam and the recording/reproducing laser beam. Specifically, in the example illustrated in the figure, the servo laser beam enters the objective lens as substantial parallel light, but the recording/reproducing laser beam enters as non-parallel light, and this causes a difference in displacement amount of focusing position between each light beams, based on the same shift amount of the objective lens. As a result, the shift Δx of a spot position between the recording/reproducing laser beam and the servo laser beam is generated in the tracking direction.

Because of the occurrence of the shift Δx of a spot position between the servo laser beam and the recording/ reproducing laser beam which accompanies the eccentricity of the disc (lens shift), the information recording position p-rec in the bulk layer 102 is shifted. That is, as a result, the recording cannot be performed at the intended position in the bulk layer 102.

In this case, there is a concern that information recording positions p-rec on adjacent tracks overlap depending on setting of a degree of eccentricity and a track pitch (an interval between the position directors in the reference surface Ref). Since the eccentricity of the disc might be generated specifically due to the change in a state of loaded disc whenever the disc is loaded, the change being attributable to the way in which the disc is clamped by the spindle motor, for example, when, as for a certain disc, the disc is reloaded and information is additionally recorded in the disc, a state of the eccentricity generated at the time of recording prior to the reloading differs from a state of the eccentricity generated at the time of additional recording subsequent to the reloading. Accordingly, a mark train in a previously recorded portion and a mark train in an additionally recorded portion are likely to overlap each other, or be switched each other according to circumstances.

In this case, it is difficult to reproduce the recorded signals correctly.

In order to prevent the overlapping or switching of the mark trains, an operation of detecting an amount of the lens shift of the objective lens and correcting the shift of the information recordingposition p-rec according to the detection result have been conventionally performed.

However, there is a concern that such a correction may not effectively work when an amount of the shift Δx of a spot position is large. Specifically, when the information recording position p-rec is corrected according to the detection result of the lens shift amount, it is desirable that the maximum amount of the shift Δx of a spot position is suppressed, for example, to 1/10 of the record pitch (the pitch in the radial direction) of the mark trains.

SOLUTIONS TO PROBLEMS

In order to solve such above-mentioned problems, an optical pickup according to the present invention is structured in the following manner.

That is, the optical system includes: an objective lens that irradiates an optical recording medium with a first light for use in information recording in or information reproduction from a recording layer and a second light different from the first light, and a first focusing position adjusting unit that adjusts a focusing position of the first light having passed through the objective lens by changing collimation of the first light entering the objective lens, the optical recording medium including a reference surface provided with a reflection film, in which a position director is formed in a spiral form or a concentric circular form, and the recording layer which is provided in a layer position different from the reference surface and in which a mark corresponding to irradiation of light is formed and hence information is recorded; a focus mechanism of the objective lens; and a tracking mechanism of the objective lens.

Furthermore, the optical system is designed such that, regarding a magnification of the second light defined as a ratio of a distance between a position of an object point of the second light viewed from the objective lens and a principal plane of the objective lens with respect to a distance between the principal plane of the objective lens and a focusing position of second light, and a magnification of the first light defined as a ratio of a distance between a position of an object point of the first light viewed from the objective lens and the principal plane of the objective lens with respect to a distance between the principal plane of the objective lens and the focusing position of the first light, the magnification of the second light falls within a magnification range of the first light determined in accordance with a focusing position adjustable range adjusted by the first focusing position adjusting unit.

Moreover, an optical drive device according to the present invention is structured as follows.

That is, it includes an optical pickup including an optical system, a focus mechanism of an objective lens, and a tracking mechanism of the objective lens, the optical system including an objective lens that irradiates an optical recording medium with a first light for use in information recording or information reproduction in or from a recording layer and a second light different from the first light, and a first focusing position adjusting unit that adjusts a focusing position of the first light having passed through the objective lens by changing collimation of the first light entering the objective lens, the optical recording medium including a reference surface provided with a reflection film, in which a position director is formed in a spiral form or a concentric circular form, and the recording layer which is provided in a layer position different from the reference surface and in which a mark corresponding to irradiation of light is formed and hence information is recorded, in which the optical system is designed such that, regarding a magnification of the second light defined as a ratio of a distance between a position of an object point of the second light viewed from the objective lens and a principal plane of the objective lens with respect to a distance between the principal plane of the objective lens and a focusing position of second light, and a magnification of the first light defined as a ratio of a distance between a position of an object point of the first light viewed from the objective lens and the principal plane of the objective lens with respect to a distance between the principal plane of the objective lens and the focusing position of the first light, the magnification of the second light falls within a magnification range of the first light determined in accordance with a focusing position adjustable range adjusted by the first focusing position adjusting unit.

Furthermore, it may further include a focus servo control unit that controls the focus mechanism based on reflected light of the second light reflected from the reference surface such that the focusing position of the second light moves along on the reference surface.

Still furthermore, it may further include a tracking servo control unit that controls the tracking mechanism based on the reflected light of the second light reflected from the reference surface such that the focusing position of the second light follows the position director on the reference surface.

Yet furthermore, it may further include a focusing position setting control unit that controls setting of the focusing position of the first light by controlling the first focusing position adjusting unit.

Herein, as understood from the above description in connection with Fig. 32, the shift $\Delta x$ of a spot position between the first light and the second light is exhibited as a difference in displacement amount between the focusing position of the first light and the focusing position of the second light, with respect to the same shift amount of the objective lens.

In this case, the displacement amount of the focusing position of the first light (recording/reproducing light) with respect to the shift amount of the objective lens is assumed to change according to the magnification of the first light. Similarly, the displacement amount of the focusing position of the second light (servo light) with respect to the shift amount of the objective lens changes according to the magnification of the second light.

Accordingly, in the way described above, the magnification of the second light is set to fall within the range of the magnification of the first light, it is possible to decrease a difference in displacement amount between the focusing position of the first light and the focusing position of the second light with respect to the same shift amount of the objective lens, and as a result, it is possible to suppress the amount of the shift $\Delta x$ of a spot position.

Since the shift $\Delta x$ of the spot position can be controlled in this way, it is possible to make the correction of the shift of an information recording position (the shift in the tracking direction of the focusing position of the first light) which is caused by the lens shift attributable to the eccentricity effectively work.

EFFECTS OF THE INVENTION

According to the present invention as described above, it is possible to suppress the shift of a spot position between the first light and the second light caused by the lens shift of the objective lens which is attributable to the eccentricity.

Since the shift of a spot position between the first light and the second light is suppressed in this way, the correction of the shift of the information recording position may effectively work, and as a result, a stable reproduction operation can be achieved.

BRIEF DESCRIPTION OF DRAWINGS

Fig. 1 is a cross-sectional structural view of an optical recording medium serving as a recording/reproduction target according to a first embodiment.

Fig. 2 is a diagram illustrating an internal structure of an optical pickup included in an optical drive device according to the first embodiment.

Fig. 3 is diagram to describe a technique which adjusts a focusing position using a recording/reproducing light focus adjusting mechanism.

Fig. 4 is a diagram illustrating the overall internal structure of the optical drive device serving as one embodiment.

Fig. 5 is a diagram to describe a problem with a case where a servo light focus mechanism is not provided.

Fig. 6 is a diagram to describe the operation of the servo light focus mechanism.

Fig. 7 is a diagram to describe an example of forming one cycle of a concave-convex pattern of a DOE.

Fig. 8 is a diagram illustrating an example of a phase difference given to a servo laser beam when a step difference illustrated in Fig. 7 is set.

Fig. 9 is a diagram illustrating an example of setting of the concave-convex pattern of the DOE.

Fig. 10 is a diagram to describe a shift ($\Delta z$) of an information recording position in a focus direction corresponding to surface wobbling.

Fig. 11 is a diagram to describe an example of setting of a magnification.

Fig. 12 is a diagram to describe a case where magnification setting conditions as an embodiment are not satisfied.

Fig. 13 is a diagram illustrating an example of a focal position of each light in a state in which both a recording/reproducing laser beam and a servo laser beam enter an objective lens as parallel light.

Fig. 14 is a diagram illustrating an internal structure of an optical pickup provided for an optical drive device according to a second embodiment.

Fig. 15 is a diagram to describe a comatic aberration suppression technique according to the second embodiment.

Fig. 16 is a diagram to describe a specific design value of an objective lens according to the second embodiment.

Fig. 17 is a diagram to describe WD of the objective lens which is set in the second embodiment.

Fig. 18 is a diagram to describe an example of the design of a portion related to a servo laser beam.

Fig. 19 is a diagram to describe a behavior of a phase difference that is to be given to the servo laser beam by a DOE in order to achieve both a light converging function and a spherical aberration correction function with respect to the servo laser beam.

Fig. 20 is a diagram to describe an effect when the DOE of the second embodiment is used.

Fig. 21 is a diagram to describe a magnification of the recording/reproducing laser beam and magnification of the servo laser beam set in the second embodiment.

Fig. 22 is a diagram illustrating an extracted portion of an optical pickup provided for an optical drive device according to a third embodiment.

Fig. 23 is a diagram to describe a cross-sectional structure of an optical recording medium serving as a recording/reproduction target in the third embodiment, and an example of setting of a magnification of a servo laser beam in the third embodiment.

Fig. 24 is a diagram illustrating an extracted portion of an optical pickup provided for an optical drive device according to a fourth embodiment.

Fig. 25 is a diagram to describe a bulk recording system.

Fig. 26 is a diagram to describe a micro-hologram system.

Fig. 27 is a diagram to describe a negative micro-hologram system.

Fig. 28 is a diagram illustrating an example of a cross-sectional structure of an actual bulk-type recording medium with a reference surface.

Fig. 29 is a diagram to describe an operation performed on a bulk-type recording medium at the time of mark recording.

Fig. 30 is a diagram illustrating the outline of an optical system for performing recording and reproduction with respect to a bulk-type recording medium.

Fig. 31 is a diagram to describe a servo control at the time of reproducing a bulk-type recording medium.

Fig. 32 is a diagram to describe a case where a shift ($\Delta x$) of a focusing position between a servo laser beam and a recording/reproducing laser beam is caused due to the eccentricity of a disc.

MODE FOR CARRYING OUT THE INVENTION

Hereafter, preferred embodiments (hereinafter, referred to as embodiments) of the present invention are described.

The description is made in the following order.

<1. First embodiment>

[1-1. Optical recording medium as recording/reproduction target]
[1-2. Configuration of optical drive device]

- Internal structure of optical pickup -
- Overall internal structure of optical drive device -

[1-3. Role of servo light focus mechanism]
[1-4. First role of DOE]
[1-5. Magnification setting as embodiment]

- Suppression of shift of spot position in tracking direction -
- Suppression of shift of information recording position in focus direction -
- Specific example of setting of magnification -

1-5. The second role of DOE

<2. Second embodiment>
<3. Third embodiment>
<4. Fourth embodiment>
<5. Modification>

<1. First embodiment>

[1-1. Optical recording medium as recording/reproduction target]

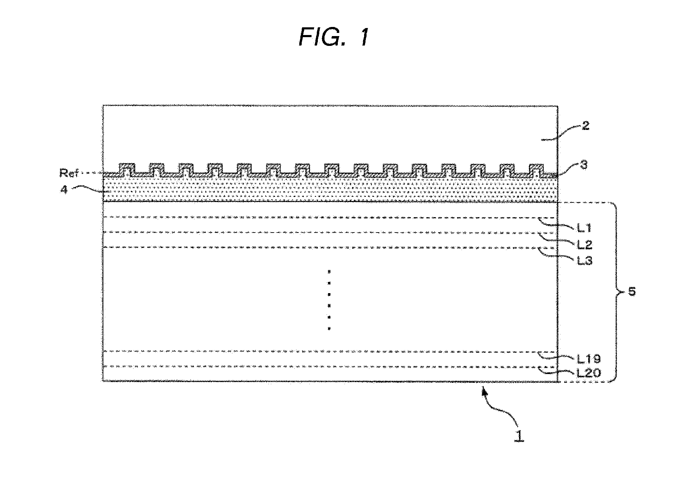

Fig. 1 illustrates a cross-sectional structural view of an optical recording medium serving as a recording/reproduction target according to a first embodiment.

The optical recording medium serving as a recording/reproduction target of this embodiment is an optical medium of a so-called bulk recording-type, and is referred to as a bulk-type recording medium 1 hereinafter.

The bulk-type recording medium 1 is a disc-shaped optical recording medium. Laser beam irradiation to the bulk-type recording medium 1 which is rotating is performed for mark recording (information recording). Moreover, the laser beam irradiation to the rotating bulk-type recording medium 1 is also performed even for reproduction of the recorded information.

Moreover, the optical recording medium is a collective term for recording media on which recording/reproduction of information is performed by irradiation of light.

As illustrated in Fig. 1, in the bulk-type recording medium 1, a cover layer 2, a selective reflection film 3, an intermediate layer 4, and a bulk layer 5 are formed in this order from the upper layer side.

Here, in the present description, the "upper layer side" refers to an upper layer side when a surface upon which a laser beam from an optical drive device (a recording/reproducing device 10) described later is incident serves as a top surface.

In addition, in the present description, a term "depth direction" is used. This term "depth direction" refers to a vertical direction according to the above-mentioned definition of "the upper layer side" (namely, a direction parallel to an incident direction of the laser beam in which the laser beam from the optical drive device is incident, i.e. a focus direction).

In the bulk-type recording medium 1, the cover layer 2 is formed of a resin, such as polycarbonate, or acrylic, for example. As illustrated in the figure, on the underside surface of the cover layer 2, a guiding groove serving as a position director for guiding a recording/regeneration position is formed, and as illustrated in the figure, the cover layer 2 has a concave-convex shape in cross section. The position director is formed in a spiral form or a concentric circular form. In the case of this example, the description is continued assuming that the position director is formed in a spiral form. As the guiding groove, a continuous groove (groove) or a series of pits is formed. For example, when the guiding groove is formed as a series of pits, position information (absolute position information: rotation angle information, radius position information, or the like serving as information that represents rotation angle position on a disc) is recorded by a combination of lengths of pits and lands. Alternatively, when the guiding groove is formed as a groove, the groove is formed to meander (wobble) periodically so that the position information is recorded by periodic information of the meanders.

The cover layer 2 is produced through an injection molding or the like, using a stamper with a guiding groove (a concave-convex shape) formed therein.

Moreover, the selective reflection film 3 is deposited on the underside surface of the cover layer 2 with the formed guiding groove.

Here, in the bulk recording system as described above, besides light (recording/reproducing laser beam) for performing mark-recording/mark-reproduction on the bulk layer 5 serving as a recording layer, light (servo laser beam) for obtaining a focus error signal or a tracking error signal based on the guiding groove described above is additionally irradiated.

In this case, there is a concern that, when the servo laser beam reaches the bulk layer 5, it negatively affects the recorded marks in the bulk layer 5. Therefore, a reflection film having selectivity of reflecting the servo laser beam but transmitting the recording/reproducing laser beam is necessary.

From the past, in the bulk recording system, the recording/reproducing laser beam and the servo laser beam use laser beams in different wavelength bands, respectively. In order to respond to this, as the selective reflection film 3, a selective reflection film having a wavelength selectivity of reflecting light in the same wavelength band as the servo laser beam but transmitting light having wavelengths other than that has been used.

On the lower layer side of the selective reflection film 3, the bulk layer 5 serving as a recording layer is laminated (or bonded) with the intermediate layer 4, which is formed of an adhesive material such as, a UV-curing resin or the like, interposed therebetween.

As a material (recording material) for forming the bulk layer 5, an appropriate one selected depending on an adopted bulk recording system among the positive-type micro-hologramsystem, the negative micro-hologram system, and the void recording system, and the like may be used.

The mark recording system for an optical recording medium serving as a target in the present invention is not particularly limited, but an arbitrary system in the category of the bulk recording system may be adopted. The following description is made, by way of example, in connection with the case of adopting the void recording system.

Here, in the bulk-type recording medium 1 having the structure as describedabove, the selective reflection film 3 in which the position director serving as the guiding groove described above is formed is a reflection surface which serves as a reference when the position control of the recording/reproducing laser beam is performed based on the servo laser beam as described below. In a sense of this meaning, the surface on which the selective reflection film 3 is formed is referred to as a reference surface Ref.

As previously described above with reference to Fig. 29, in the bulk-type optical recording medium, layer positions (information recording layer positions L) on which information recording is to be performed are set beforehand in order to achieve multi-layer recording in the bulk layer. In the bulk-type recording medium 1 of this embodiment, as the information recording layer position L, a total of 20 information recording layer positions, that is, a first information recording layer position L1, a second information recording layer position L2, and a third information recording layer position L3, ..., a nineteenth information recording layer position L19, and a twentieth information recording layer position L20 are set in this order from the upper layer side as illustrated in the figure.

Here, a specific example of each layer position will be described. The first information recording layer position L1 located on the top is set as a position in a distance of about 100 $\mu$m from the surface (top surface) of the bulk-type recording medium 1. Moreover, the twentieth information recording layer position L20 located on the bottom is set as a position in a distance of about 300 $\mu$m from the surface. Further, these respective information recording layer positions L ranging from the first information recording layer position L1 to the twentieth information recording layer position L20 are set such that an interval between the respective adjacent information recording layer positions L is 10 $\mu$m on average. That is, the reference surface Ref is located at a position in a distance of about 50 $\mu$m from the surface, and therefore, the distance of the first information recording layer position L1 from the reference surface Ref is set to about 50 $\mu$m.

[1-2. Configuration of optical drive device]

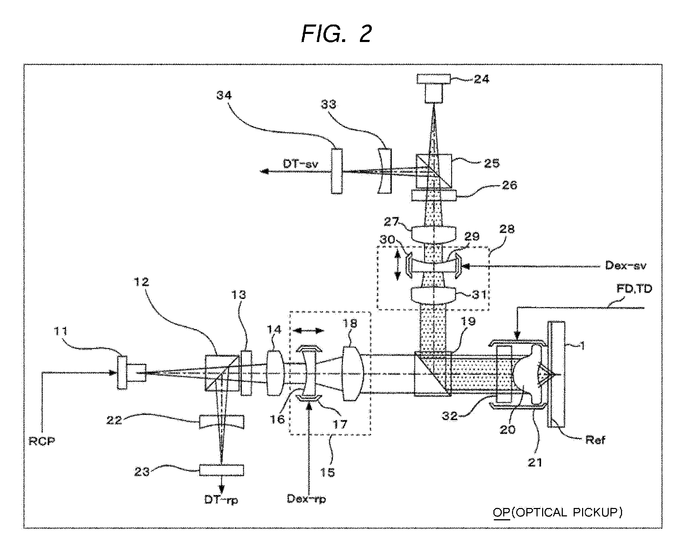

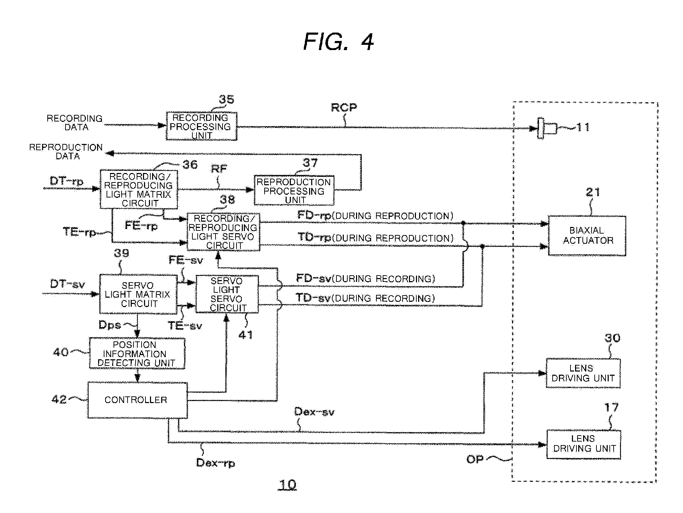

Figs. 2 and 4 are diagrams to describe an internal structure of an optical drive device (referred to as a recording/reproducing device 10) as the first embodiment that performs recording/reproduction with respect to the bulk-type recording medium 1 that has the structure illustrated in Fig. 1.

Fig. 2 mainly illustrates an internal structure of an optical pickup OP provided for the recording/reproducing device 10 (and also illustrates the bulk-type recording medium 1), and Fig. 4 illustrates the overall internal structure of the recording/reproducing device 10.

- Internal structure of optical pickup -

First, the internal structure of the optical pickup OP will be overviewed with reference to Fig. 2.

The bulk-type recording medium 1 illustrated in the figure is set such that its center hole is locked at a predetermined position in the recording/reproducing device 10, and is maintained in a state in which the bulk-type recording medium 1 can be rotated by a spindle motor (not illustrated).

The optical pickup OP is installed to irradiate the bulk-type recording medium 1 rotating by the spindle motor with the recording/reproducing laser beam and the servo laser beam.

The optical pickup OP is equipped with a recording/reproducing laser 11 and a servo laser 24. The recording/reproducing laser 11 serves as a light source for the recording/reproducing laser beam with which information is recorded in the form of marks and the information recorded in the form of marks are reproduced. The servo laser 24 serves as a light source for the servo laser beam used to perform position control using the guiding groove formed in the reference surface Ref.

Here, as described above, the recording/reproducing laser beam and the servo laser beam differ in wavelength.

In the case of this example, the wavelength of the recording/reproducing laser beam is set to about 405 nm (a so-called blue violet laser beam), and the wavelength of the servo laser beam is set to about 650 nm (red laser beam).

Moreover, the optical pickup OP is equipped with an objective lens 20 serving as an output terminal when the bulk-type recording medium 1 is irradiated with the record/reproduction laser beam and the servo laser beam.

In addition, the optical pickup OP is further equipped with a recording/reproducing light receiving unit 23 for receiving the reflected light of the recording/reproducing laser beam reflected from the bulk-type recording medium 1 and a servo light receiving unit 34 for receiving the reflected light of the servo laser beam reflected from the bulk-type recording medium 1.

Based on the structure described above, in the optical pickup OP, an optical system is formed which leads the recording/reproducing laser beam emitted from the recording/reproducing laser 11 to the objective lens 20, and leads the reflected light of the recording/reproducing laser beam, which has been reflected from the bulk-type recording medium 1 and then has entered the objective lens 20, to the recording/reproducing light receiving unit 23.

Specifically, the recording/reproducing laser beam emitted from the recording/reproducing laser 11 enters a polarizing beam splitter 12 as diverging light. The polarizing beam splitter 12 is structured to transmit the recording/reproducing laser beam which enters as the diverging light from the recording/reproducing laser 11.

The recording/reproducing laser beam that has passed through the polarizing beam splitter 12 further travels through a quarter wavelength plate 13, and is then converted into parallel light by a collimating lens 14. After that, the recording/reproducing laser beam enters a recording/reproducing light focus mechanism (expander) 15.

As illustrated in the figure, the recording/reproducing light focus mechanism 15 is structured to include a concave lens 16, a lens driving unit 17, and a convex lens 18.

The recording/reproducing laser beam which has passed through the collimating lens 14 further travels through the concave lens 16 and the convex lens 18, and then exits the recording/reproducing light focus mechanism 15.

Since the concave lens 16 is driven to move in a direction parallel to an optical axis of the recording/reproducing laser beam by the lens driving unit 17 in the recording/reproducing light focus mechanism 15, focus control of the recording/reproducing laser beam is independently performed.

The lens driving unit 17 drives the concave lens 16 to move based on a driving signal Dex-rp supplied from a controller 42 (Fig. 4) described later. This driving operation changes collimation of the recording/reproducing laser beam entering the objective lens 20, and thus leads to an adjustment in the focusing position of the recording/reproducing laser beam.

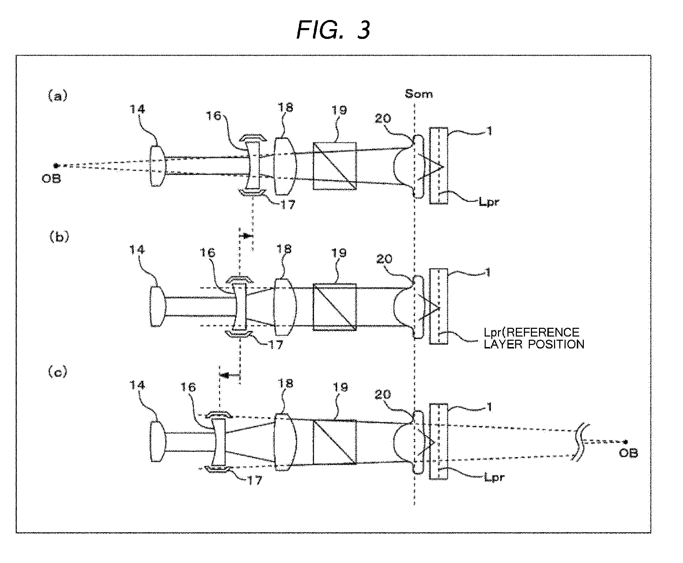

Hereinafter, a specific technique of adjusting the focusing position using the recording/reproducing light focus mechanism 15 is described with reference to Fig. 3.

First, at the time of performing recording on each layer position L in the bulk layer 5, a reference layer position Lpr is set beforehand. The reference layer position Lpr is a layer position serving as a reference at the time of adjusting (setting) the focusing position of the recording/reproducing laser beam. Specifically, in the case of the present example, an information recording layer position L which is located at about a midway point within the information recording layer positions L1 to L20 (for example, a position in a distance of 200 $\mu$m from the surface: for example, L9 or L10) is set as the reference layer position Lpr.

The recording/reproducing light focus mechanism 15 in this case adjusts the focusing position of the recording/reproducing laser beam based on the state of being focused on the reference layer position Lpr. Specifically, in this case, the optical system for the recording/reproducing laser beam is designed such that, in a state in which the recording/reproducing laser beam is focused on the reference layer position Lpr, the concave lens 16 moved by the lens driving unit 17 stays on the reference position, as illustrated in Fig. 3(b). Specifically, in this case, the reference position of the concave lens 16 implies a state in which a level of the driving signal Dex-rp supplied to the lens driving unit 17 is zero. Furthermore, the optical system of this case is designed such that, in a state in which the concave lens 16 stays at the reference position, the recording/reproducing laser beam which is emitted after having passed through the concave lens 16 and then through the convex lens 18 (or, enters the objective lens 20) becomes parallel light as illustrated in the figure.

Taking the state illustrated in Fig. 3(b) as a reference, at the time of setting the focusing position of the recording/reproducing laser beam on the information recording layer position L which is disposed on a lower layer side of the reference layer position Lpr, the concave lens 16 is driven to move in a direction of moving closer to the objective lens 20 as illustrated in Fig. 3(a) (that is, the concave lens 16 is supplied with, for example, a signal of a positive polarity as the driving signal Dex-rp). In this way, the recording/reproducing laser beam entering the objective lens 20 becomes diverging light, and, as a result, the focusing position of the recording/reproducing laser beam is adjusted to a lower layer side of the reference layer position Lpr.

In this case, a diverging angle of the recording/reproducing laser beam entering the objective lens 20 correspondingly increases with a driving amount of the concave lens 16 from the reference position of the concave lens 16, and the focusing position of the recording/reproducing laser beam will be adjusted from the reference layer position Lpr to the lower layer side.

On the other hand, when the focusing position of the recording/reproducing laser beam is to be set to the information recording layer position L on the upper layer side of the reference layer position Lpr, the recording/reproducing laser beam entering the objective lens 20 is changed into converging light by driving the concave lens 16 to move in a direction (for example, the direction toward a light source) of moving away from the objective lens 20 as illustrated in Fig. 3(c) (for example, by supplying a signal of a negative polarity as the driving signal Dex-rp). As a result, the focusing position of the recording/reproducing laser beam can be adjusted to the upper layer of the reference layer position Lpr. In this case, by increasing the driving amount of the concave lens 16 to be moved from the reference position, the converging angle of the recording/reproducing laser beam entering the objective lens 20 can be increased and the focusing position of the recording/reproducing laser beam can be adjusted to the upper layer side.

The description is made by returning to Fig. 2.

The recording/reproducing laser beam that has passed through the recording/reproducing light focus mechanism 15 enters a dichroic prism 19.

In the dichroic prism 19, the selective reflection surface is structured to transmit light having the same wavelength as the recording/reproducing laser beam but reflects light having the other wavelengths. Accordingly, the recording/reproducing laser beam that has entered in the way described above passes through the dichroic prism 19.

The recording/reproducing laser beam that has passed through the dichroic prism 19 further travels through a DOE (Diffractive Optical Element) 32 as illustrated in the figure, is then condensed by the objective lens 20, and is finally irradiated to the bulk-type recording medium 1.

Here, the DOE 32 can be (collectively) driven along with the objective lens 20 by the biaxial actuator 21. In addition, the operation in association with the provision of the DOE 32 will be described.

For the objective lens 20, the biaxial actuator 21 which holds the objective lens 20 such that the objective lens 20 can be displaced in a focus direction (a direction of moving closer to and away from the bulk-type recording medium 1) and a tracking direction (a direction orthogonal to the focus direction: a radial direction of the bulk-type recording medium 1) is provided.

The biaxial actuator 21 is provided with a focus coil and a tracking coil so that the biaxial actuator 21 displaces the objective lens 20 in the focus direction and the tracking direction in accordance with supply of driving signals (driving signals FD and TD to be described below) to the focus coil and the tracking coil, respectively.

Here, at the time of reproduction, as the recording/reproducing laser beam is irradiated to the bulk-type recording medium 1 in the way described above, the reflected light of the recording/reproducing laser beam can be obtained by the bulk-type recording medium 1 (by a mark train recorded in the information recording layer L serving as a reproduction target layer in the bulk layer 5). The reflected light of the recording/reproducing laser beam thus obtained reaches the dichroic prism 19 after sequentially passing through the objective lens 20 and the DOE 32, and then passes through the dichroic prism 19.

The reflected light of the recording/reproducing laser beam which has passed through the dichroic prism 19 sequentially travels through the recording/reproducing light focus mechanism 15 (the convex lens 18 and then the concave lens 16), the collimating lens 14, and the quarter wavelength plate 13 in this order, and, after passing through all of these, enters the polarizing beam splitter 12.

Here, the reflected light (return light) of the recording/reproducing laser beam which has entered the polarizing beam splitter 12 is different in polarization direction by an angle of 90 degrees from the recording/reproducing laser beam (outward light) that has emitted from the recording/reproducing laser beam 11 side and entered the polarizing beam splitter 12, due to the action of the quarter wavelength plate 13 and the action of the reflection in the bulk-type recording medium 1. As a result, the reflected light of the recording/reproducing laser beam that has entered in this way is reflected from the polarizing beam splitter 12.

The reflected light of the recording/reproducing laser beam reflected from the polarizing beam splitter 12 passes through a cylindrical lens 22 and is then collected by a light-receiving surface of the recording/reproducing light receiving unit 23.

In addition, besides the structure of the optical system for the recording/reproducing beam, an additional optical system is further installed in the optical pickup OP. The additional optical system guides the servo laser beam emitted from the servo laser 24 to the objective lens 20, and then guides the reflected light of the servo laser beam, which has been reflected from the bulk-type recording medium 1 and thus has entered the objective lens 20, to the servo light receiving unit 34.

As illustrated in the figure, the servo laser beam emitted from the servo laser 24 enters the polarizing beam splitter 25 in the diverged state. The polarizing beam splitter 25 is structured so as to transmit the servo laser beam (outward light) which enters from the servo laser 24.

The servo laser beam which has passed through the polarizing beam splitter 25 travels through a quarter wavelength plate 26, is then converted into parallel light by a collimating lens 27, and finally enters a servo light focus mechanism 28.

The servo light focus mechanism 28 includes a concave lens 29, a lens driving unit 30, and a convex lens 31. In this servo light focus mechanism 28, the servo laser beam which has passed through the collimating lens 28 travels through the concave lens 29 and the convex lens 31, and thereafter exits the servo light focus mechanism 28.

In the servo light focus mechanism 28, the concave lens 29 is also driven to move in a direction parallel to an optical axis of the servo laser beam by the lens driving unit 30 as in the recording/reproducing light focus mechanism 15, so that focus control of the servo laser beam is independently performed.

The lens driving unit 30 drives the concave lens 29 based on a driving signal Dex-sv supplied from the controller 42 described later. Through this operation, the collimation of the servo laser beam to enter the objective lens 20 is changed, and as a result, the focusing position of the servo laser beam is independently adjusted.

Here, the meaning of the expression that the focusing position of the servo laser beam is independently adjusted by the servo light focus mechanism 28 is described below.

The servo laser beam which has passed through the servo light focus mechanism 28 enters the dichroic prism 19 as illustrated in the figure.

As described above, since the dichroic prism 19 is structured to transmit light having the same wavelength as the recording/reproducing laser beam and reflects light having the other wavelengths, the servo laser beam is reflected by the dichroic prism 19, then passes through the DOE 32, is then condensed by the objective lens 20, and is finally irradiated to the bulk-type recording medium 1.

Moreover, the reflected light of the servo laser beam (the reflected light reflected from the reference surface Ref) obtained in accordance with irradiation of the servo laser beam to the bulk-type recording medium 1 sequentially passes through the objective lens 20 and the DOE 32. The light is then reflected by the dichroic prism 19, and this resultant reflected light enters the polarizing beam splitter 25 after sequentially passing through the servo light focus mechanism 28 (in order of the convex lens 31 and the concave lens 29), the collimating lens 27, and the quarter wavelength plate 26 in this order.

Like the case of the previously described recording/reproducing laser beam, the polarizing direction of the reflected light (return light) of the servo laser beam entering from the bulk-type recording medium 1 is different from that of the outward light by an angle of 90 degrees due to the action of the quarter wavelength plate 26 and the action of the reflection in the bulk-type recording medium 1. Accordingly, the reflected light of the servo laser beam which serves as the return light is reflected by the polarizing beam splitter 25.

The reflected light of the servo laser beam reflected from the polarizing beam splitter 25 is condensed on the light-receiving surface of the servo light receiving unit 34 after passing through the collimating lens 33.

Here, even though not illustrated in the figure, in the actual recording/reproducing device 10, a slide-driving unit which drives the above-described entire optical pickup OP to slide in the tracking direction is installed. Due to the movement of the optical pickup OP by the slide-driving unit, the irradiation position of the laser beam can be displaced over a wide range.

- Overall internal structure of optical drive device -

The overall internal structure of the recording/reproducing device 10 is illustrated in Fig. 4.

Moreover, Fig. 4 illustrates only a portion of the internal structure of the optical pickup OP.

In Fig. 4, in the recording/reproducing device 10, a structure of a signal processing system for performing focus/tracking control of the objective lens 20 at the time of recording/reproduction, or mark-recording/reproduction on the bulk layer 5 is provided. The structure of the signal processing system includes a recording processing unit 35, a recording/reproducing light matrix circuit 36, a reproduction processing unit 37, a recording/reproducing light servo circuit 38, a servo light matrix circuit 39, a position information detecting unit 40, and servo light servo circuit 41 which are all illustrated in the figure.

Data (recording data) to be recorded in the bulk-type recording medium 1 is input to the recording processing unit 35. The recording processing unit 35 adds an error correction code to the input recording data or performs a predetermined recording modulation encoding operation, thereby obtaining a modulated recorded data string which is, for example, for example, a binary data string made up of "0" and "1" which is actually recorded on the bulk-type recording medium 1.

The recording processing unit 35 drives the recording/reproducing laser 11 in the optical pickup OP to emit light with use of a recording pulse RCP, based on the modulated recorded data string which is thus generated.

The recording/reproducing light matrix circuit 36 includes a current-voltage converting circuit and a matrix operating/amplifying circuit so as to respond to a received light signal DT-rp (output current) supplied from a plurality of light-receiving elements serving as the recording/reproducing light receiving unit 23 illustrated in Fig. 2, and thus generates a signal necessary for matrix operation processing.

Specifically, the recording/reproducing light matrix circuit 36 generates a high frequency signal (hereinafter, referred to as a reproduced signal RF) corresponding to a reproduced signal obtained by reproducing the modulated recorded data string, a focus error signal FE-rp for focus servo control, and a tracking error signal TE-rp for tracking servo control.

The reproduced signal RF generated by the recording/reproducing light matrix circuit 36 is supplied to the reproduction processing unit 37.

In addition, the focus error signal FE-rp and the tracking error signal TE-rp are supplied to the recording/reproducing light servo circuit 38.

The reproduction processing unit 37 performs reproduction processing for recovering the recording data, such as binarization processing or decoding/error-correction processing of modulated recorded code, on the reproduced signal RF to obtain reproduction data reproduced from the recording data.

Moreover, the recording/reproducing light servo circuit 38 generates a focus servo signal FS-rp and a tracking servo signal TS-rp based on the focus error signal FE-rp and the tracking error signal TE-rp supplied from the recording/reproducing light matrix circuit 36, respectively, and generates a focus driving signal FD-rp and a tracking driving signal TD-rp based on these focus servo signal FS-rp and tracking servo signal TS-rp, respectively. Further, it implements the focus servo control and the tracking servo control of the recording/reproducing laser beam by driving the focus coil and the tracking coil of the biaxial actuator 21.

In addition, as understood from the previous description in connection with Figs. 29 to 31, the servo control of the biaxial actuator 21 (objective lens 20) based on the reflected light of the recording/reproducing laser beam is performed at the time of reproduction.

In addition, in accordance with an instruction made by the controller 42 for reproduction, the recording/reproducing light servo circuit 38 turns off a tracking servo loop and hence applies a jumping pulse to the tracking coil, thereby realizing a track jumping operation, performing a tracking servo pull-in control, or the like. Moreover, a focus servo insertion control, or the like is also performed.

In addition, in a signal processing system for the reflected light of the servo laser beam, the servo light matrix circuit 39 generates necessary signals based on a received light signal DT-sv supplied from the plurality of light-receiving elements of the servo light receiving unit 34 illustrated in Fig. 2.

Specifically, the servo light matrix circuit 39 generates a focus error signal FE-sv and a tracking error signal TE-sv for focus servo control and the tracking servo control, respectively.

Moreover, it also generates a position information detecting signal Dps used to detect absolute position information (address information) recorded in the reference surface Ref. For example, when the absolute position information is recorded in the form of a series of pits, a summed signal is generated as the position information detecting signal Dps.

Alternatively, when the absolute position information is recorded in the form of a meandering groove, a push-pull signal is generated as the position information detecting signal Dps.

The position information detecting signal Dps is supplied to the position information detecting unit 40. The position information detecting unit 40 detects the absolute position information recorded in the reference surface Ref based on the position information detecting signal Dps. The detected absolute position information is supplied to the controller 42.

Moreover, the focus error signal FE-sv and the tracking error signal TE-sv generated by the servo light matrix circuit 39 are supplied to the servo light servo circuit 41.

The servo light servo circuit 41 generates the focus servo signal FS-sv and the tracking servo signal TS-sv based on the focus error signal FE-sv and the tracking error signal TE-sv, respectively.

Next, at the time of recording, in accordance with an instruction from the controller 42, the focus coil and the tracking coil of the biaxial actuator 21 are driven based on the focus driving signal FD-sv and the tracking driving signal TD-sv which have been generated based on the focus servo signal FS-sv and the tracking servo signal TS-sv. In this way, the focus servo control and the tracking servo control for the servo laser beam are implemented.

In addition, in accordance with an instruction for recording made by the controller 42, the servo light servo circuit 41 turns off the tracking servo loop and hence applies the jumping pulse to the tracking coil of the biaxial actuator 21, thereby realizing the track jumping operation, performing the tracking servo pull-in control, or the like. In addition, the servo light servo circuit 41 also performs the focus servo pull-in control for the reference surface Ref, or the like.

The controller 42 is formed by a microcomputer including, for example, a CPU (Central Processing Unit) and a memory (storage device), such as a ROM (Read Only Memory), a RAM (Random Access Memory), and the like, and performs the overall control of the recording/reproducing device 10 by executing control/processing in accordance with a program stored, for example, in the ROM, or the like.

Specifically, the controller 42 performs control for implementing servo control switching of the objective lens 20 at the time of recording/reproduction which has been described previously with reference to Figs. 29 to 31. That is, at the time of recording, the controller 42 instructs the servo light servo circuit 41 to output the focus driving signal FD-sv and the tracking driving signal TD-sv, and instructs the recording/reproducing light servo circuit 38 to stop outputting the focus driving signal FD-rp and the tracking driving signal TD-rp.

On the other hand, at the time of reproduction, the controller 42 instructs the recording/reproducing light servo circuit 38 to output the focus driving signal FD-rp and the tracking driving signal TD-rp, and instructs the servo light servo circuit 41 to stop outputting the focus driving signal FD-sv and the tracking driving signal TD-sv.

In addition, the controller 42 performs a seek operation control for the servo light servo circuit 41. That is, the controller 42 instructs the servo circuit 41 to move the spot position of the servo laser beam to a position of a predetermined address on the reference surface Ref.

In addition, the controller 42 causes the recording/reproducing laser beam to be focused on a required information recording layer position L and the servo laser beam to be focused on the reference surface Ref by controlling the operation of the lens driving unit 17 in the recording/reproducing light focus mechanism 15 and the operation of the lens driving unit 30 in the servo light focus mechanism 28. A specific technique of adjusting the focusing position will be described below.

[1-3. Role of servo light focus mechanism]

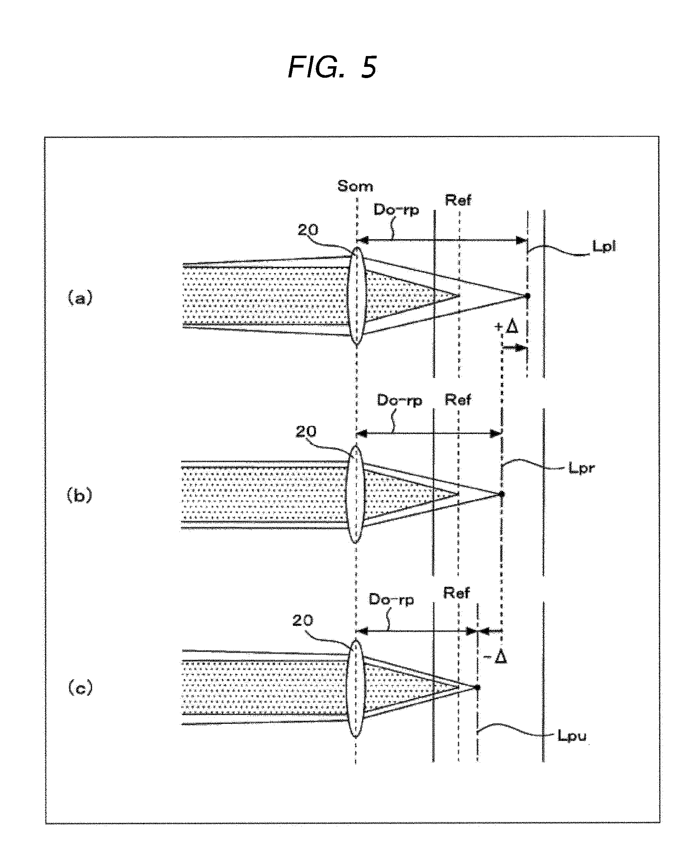

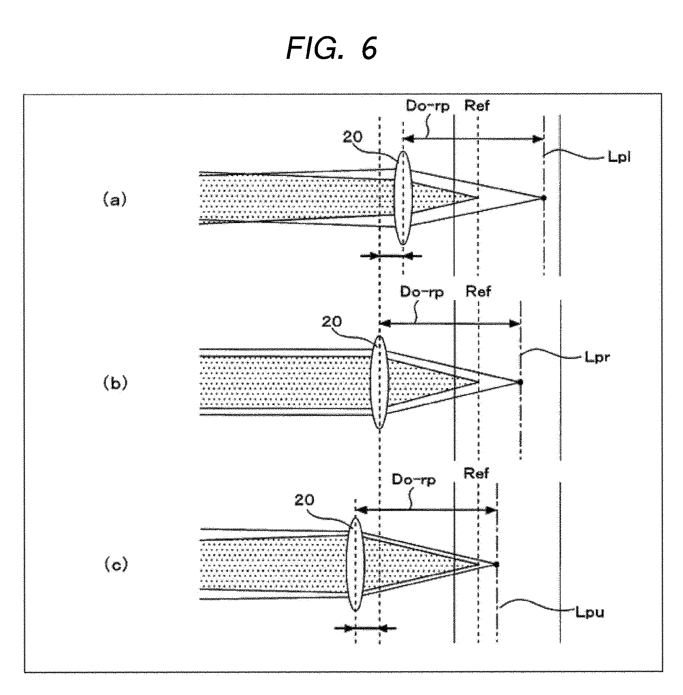

Here, the recording/reproducing device 10 of the present embodiment is provided with the servo light focus mechanism 28 as well as the recording/reproducing light focus mechanism 15, and the merit of such a structure will be described with reference to Figs. 5 and 6.

Fig. 5 is a diagram to describe a problem of the case where the servo light focus mechanism 28 is not provided. First, within Fig. 5, Fig. 5 (b) illustrates a state in which the focusing position of the recording/reproducing laser beam is adjusted to the reference layer position Lpr set in the bulk layer 5. As previously described with reference to Fig. 3, the optical system of this case is designed such that the recording/reproducing laser beam enters the objective lens 20 as parallel light when the recording/reproducing laser beam is focused on the reference layer position Lpr, and the objective lens 20 stays at the reference position in a state in which the recording/reproducing laser beam is focused on the reference layer position Lpr.

Furthermore, in this case, the objective lens 20 is designed such that the focusing position of the servo laser beam agrees with the reference surface Ref when the servo laser beam enters the objective lens 20 as parallel light in the state in which the objective lens 20 stays at the reference position as described above.

When the focusing position of the recording/reproducing laser beam is to be adjusted from the state illustrated in Fig. 5 (b) to the information recording layer position Lpl formed on the lower layer side of the reference layer position Lpr, as illustrated in Fig. 5(a), the recording/reproducing laser beam is adjusted to enter the objective lens 20 as diverging light. That is, as previously described with reference to Fig. 3(a), the concave lens 16 in the recording/reproducing light focus mechanism 15 is moved toward the objective lens 20 so that the recording/reproducing laser beam enters the objective lens 20 as diverging light.

Moreover, when the focusing position of the recording/reproducing laser beam is to be adjusted to the information recording layer position Lpu formed on the upper layer side of the reference layer position Lpr, as illustrated in Fig. 5 (c), the recording/reproducing laser beam is adjusted to enter the objective lens 20 as converging light. That is, as previously described with reference to Fig. 3(c), it is achieved by moving the concave lens 16 toward the light source side.

By providing the recording/reproducing light focus mechanism 15 in this way, the focusing position of the recording/reproducing laser beam can be adjusted to an arbitrary position. However, the point to be noted is that, when the focusing position is adjusted only by simply changing the collimation of the recording/reproducing laser beam entering the objective lens 20 by the recording/reproducing light focus mechanism 15, the adjustment of the focusing position may accompany a relatively large change in a distance Do-rp between a principal plane Som of the objective lens 20 and the focusing position of the recording/reproducing laser beam.

Specifically, when the state in which the reference layer position Lpr is selected as illustrated in Fig. 5(b) is to be changed to the state in which the information recording layer position Lpl on the lower layer side, is selected as illustrated in Fig. 5(a), a change indicated by +∆ in the figure is generated in the distance Do-rp. On the other hand, when the state in which the reference layer position Lpr is selected as illustrated in Fig. 5 (b) is to be changed to the state in which the information recording layer position Lpu on the upper layer side is selected as illustrated in Fig. 5 (c), a change indicated by -∆ in the figure is generated in the distance Do-rp.

Here, in general, the objective lens 20 is designed such that good aberration performance (for example, spherical aberration and comatic aberration) for the recording/reproducing laser beam is obtained in the reference state as illustrated in Fig. 5(b).

For such a reason, when a change ∆ in the distance Do-rp as sown in Figs. 5(a) to 5(c) is generated, the aberration performance is degraded in proportion to a generation amount of the change. As a result, there is a concern that multilayer recording over a relatively wide layer range, for example, about 200 μm becomes not able to be performed. That is, the number of layers for the multilayer recording is limited, and thus it becomes difficult to achieve a large recording capacity.

Therefore, a solution to such a problem is attempted by providing the servo light focus mechanism 28 as illustrated in Fig. 2 previously described above.

Fig. 6 is a diagram to describe actions of the servo light focus mechanism 28. Moreover, within Fig. 6, Fig. 6(b) illustrates the reference state in which the reference layer position Lpr is selected, Fig. 6 (a) illustrates the state in which the information recording layer position Lpl which is the lower layer side of the reference layer position Lpr, is selected, and Fig. 6(c) illustrates the state in which the information recording layer position Lpu which is the upper layer side of the reference layer position Lpr is selected.

In order to suppress the degradation of the aberration performance accompanying such a change in the distance Do-rp, the distance Do-rp is required to be constant regardless of the selected state of the information recording layer position L.

Specifically, when the state in which the reference layer position Lpr is selected as illustrated in Fig. 6 (b) is defined as a reference state, in order to select the information recording layer position Lpl disposed on the lower layer side, as illustrated in Fig. 6(a), the objective lens 20 may be moved closer to the bulk-type recording medium 1 than the reference position.

Similarly, in order to select the information recording layer position Lpu disposed on the upper layer side of the reference layer position Lpr, the objective lens 20 may be moved closer to the light source side than the reference position (that is, toward the side away from the bulk-type recording medium 1).

By controlling in such a way, the change $\Delta$ in the distance Do-rp can be suppressed and the degradation of the aberration performance of the recording/reproducing laser beam can be suppressed. That is, as a result, it is possible to relax the restriction on the number of layers for the multilayer recording, and correspondingly, an increase in the recording capacity can be achieved.

For this case, the objective lens 20 is designed such that the servo laser beam is focused on the reference surface Ref as previously described when the servo laser beam servo enters at a predetermined divergent/converging angle (as parallel light in the example of this case) while it in the reference position as illustrated in Fig. 6(b). Therefore, when the position of the objective lens 20 has been displaced from the reference position for adjustment of the distance Do-rp as described above, in order to focus the servo laser beam on the reference surface Ref, it is necessary to change the collimation of the servo laser beam entering the objective lens 20 in accordance with the moved position of the objective lens 20. Specifically, when the information recording layer position Lpl is to be selected as illustrated in Fig. 6 (a), the servo laser beam is adjusted to enter the objective lens 20 as converging light so as to respond to movement of the objective lens 20 to the side closer to the bulk-type recording medium 1 (that is, the movement of the objective lens 20 in a direction such that the focusing position of the servo laser beam is shifted to the more lower layer side). In this case, in order to select the information recording layer position L on the far lower layer side, the converging angle of the servo laser beam entering the objective lens 20 is increased. Further, when the information recording layer position Lpu is to be selected as illustrated in Fig. 6 (c), the servo laser beam is adjusted to enter the objective lens 20 as diverging light so as to respond to movement of the objective lens 20 to the side closer to the light source as described above (that is, movement of the objective lens 20 in a direction such that the focusing position of the servo laser beam is shifted to the more upper layer side). In this case, in order to select the information recording layer position L on the more upper layer side, the diverging angle of the servo laser beam entering the objective lens 20 is increased.

As such, the servo light focus mechanism 28 illustrated in Fig. 2 needs to be provided in order to change the collimation of the servo laser beam according to the moved position of the objective lens 20.

Here, it is to be noted for confirmation that a degree of the divergent/converging angle of the recording/reproducing laser beam set by the recording/reproducing light focus mechanism 15 for this case is decreased in comparison with the case which is previously described with reference to Fig. 5 previous described as the objective lens 20 is moved in the way described above. Specifically, when the information recording layer position Lpl disposed on the lower layer side of the reference layer position Lpr is selected as illustrated in Fig. 6 (a), the objective lens 20 is moved to be closer to the bulk-type recording medium 1 (that is, toward the information recording layer position Lpl side) than the reference position, the diverging angle of the recording/reproducing laser beam is decreased in comparison with the case of Fig. 5(a). Similarly, when the information recording layer position Lpu disposed on the upper layer side of the reference layer position Lpr is selected as illustrated in Fig. 6(c), since the objective lens 20 is moved to be closer to the light source than the reference position, the converging angle of the recording/reproducing laser beam is decreased in comparison with the case of Fig. 5(c).

Based on the premise described above, a specific technique of driving the recording/reproducing light focus mechanism 15, the servo light focus mechanism 28, and the biaxial actuator 21 will be described.

First, in the controller 42 illustrated Fig. 4, various kinds of information are set in advance. The various kinds of information include information on a driving amount of the concave lens 16 to be set when adjusting the focusing position of the recording/reproducing laser beam to each information recording layer position L (the value of the driving signal Dex-rp), information on a moved position of the objective lens 20 for each information recording layer position L to suppress a change $\Delta$ in the distance Do-rp (information on a driving amount of the biaxial actuator 21), and information on a moving amount of the concave lens 29 which is set to correspond to each moved position of the objective lens 20 for each information recording layer position L (the value of the driving signal Dex-sv of the lens driving unit 30).

The controller 42 focuses the recording/reproducing laser beam on a target information recording layer position L and the servo laser beam on the reference surface Ref while suppressing the change $\Delta$ in the distance Do-rp by controlling the lens driving unit 17, the servo light servo circuit 41, and the lens driving unit 30 based on these kinds of setting information. Specifically, by the instruction to the servo light servo circuit 41, the controller 42 supplies the focus coil with a focus driving signal FD of a level based on the information of the moved position of the objective lens 20 for each information recording layer position L, the level for suppressing the change $\Delta$ in the distance Do-rp. Moreover, in combination with this, the controller 42 controls and drives the lens driving unit 17 and the lens driving unit 30 in accordance with the driving signal Dex-rp and the driving signal Dex-sv, respectively, based on the set values corresponding to the information recording layer position L which is the recording target position. By the drive and control, the recording/reproducing laser beam is focused on the target information recording layer position L and the servo laser beam is focused on the reference surface Ref.

[1-4. First role of DOE]

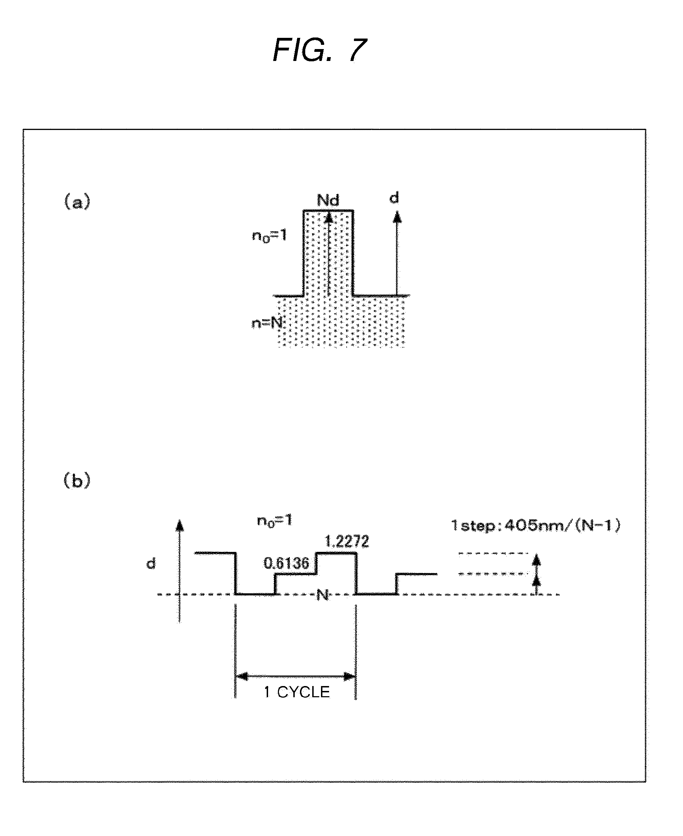

Incidentally, as previously described with reference to Fig. 2, in the optical pickup OP of the present embodiment, the DOE 32 is provided between the dichroic prism 19 and the objective lens 20. Specifically, the DOE 32 inserted such that the light having passed through the dichroic prism 19 enters the DOE 32 and the DOE 32 is collectively moved along with the objective lens 20 by the biaxial actuator 21 is provided.
The DOE 32 is inserted to play its first role of securing a margin of the visual field swing tolerance of the objective lens 20 for the servo laser beam.
In Fig. 2, the DOE 32 is a diffractive optical element having wavelength selective structured to selectively converge only the servo laser beam among the recording/reproducing laser beam and the servo laser beam that have entered from the dichroic prism 19. Specifically, the DOE 32 is configured as, for example, an HOE (Holographic Optical Element).
Because of the insertion of the DOE 32, when the information recording layer position L on the lower layer side as illustrated in Fig. 6(a) is selected and the objective lens 20 is moved toward the bulk-type recording medium 1, and as a result when the converging angle of the servo laser beam is increased and the focusing position is moved to the front side, it is possible to achieve a decrease in the diverging angle of the servo laser beam which is adjusted by the servo light focus mechanism 28.
Here, when it is assumed that the DOE 32 is not provided, if the servo laser beam is changed from the parallel light to a state in which its converging angle is increased, the visual field swing tolerance of the objective lens 20 for the servo laser beam is correspondingly decreased.
In this case, the expression that it is possible to decrease the converging angle of the servo laser beam by the insertion of the DOE 32 implies that it is possible to change the servo laser beam entering the DOE 32 to the state which approximates to the parallel. Next, as previously described, the DOE 32 is structured to be collectively driven along with the objective lens 20 by the biaxial actuator 21, and thus the strike-slip between the DOE 32 and the objective lens 20 does not occur.
In this way, since it is possible to change the servo laser beam entering the DOE 32 so as to approximate to the parallel light and to prevent the strike-slip of the DOE 32 and the objective lens 20, an improvement in the visual field swing tolerance of the servo laser beam is achieved.
It is to be noted for confirmation that, as described above, the information on the driving amount of the concave lens 29 set in the controller 42 is one which is set in consideration of even the operation that the luminous flux of the servo laser beam is converged by the DOE 32.
Here, the DOE 32 has wavelength selectivity of selectively converging only the servo laser beam, but the specific structure of the DOE 32 which is used to realize such wave length selectivity will be described with reference to Figs. 7 to 9.
Fig. 7 is a diagram to describe a concave-convex pattern for one cycle in the DOE 32.
First, Fig. 7(a) illustrates a relation between the concave-convex pattern formed in the DOE 32 and a refractive index n0 of air, a refractive index n of the DOE 32, and a depth d.
As illustrated in the figure, when no =1 and n = N are set, while the depth in the air is represented by d, the depth d in the DOE 32 is represented by dN.
Fig. 7(b) is a diagram to describe a specific example of forming a concave-convex pattern for one cycle.
Here, in this example, the refractive index n of the DOE 32 is assumed to be 1.66. In addition, the wavelength of the recording/reproducing laser beam is assumed to be 405 nm, and the wavelength of the servo laser beam is assumed to be 660 nm.
In order to inhibit the recording/reproducing laser beam from converging, the light having a wavelength of 405 nm which has been modulated by the concave-convex pattern (step portion) in the DOE 32 may have a phase difference of exactly 360° or a multiple of 360°. Accordingly, the depth d of the step (one step of the concave-convex pattern) in this case may be represented by:

$$(N - 1)d = m \times 405 \text{ nm};$$

$$d = m \times 405 \text{ nm}/(N - 1).$$

Herein, m in the above expression represents an integer.

In this example, the number of steps in the DOE 32 is "2" as illustrated, and accordingly the depth d of respective steps are d = 0.6136 $\mu$m and d = 1.2272 $\mu$m as illustrated.

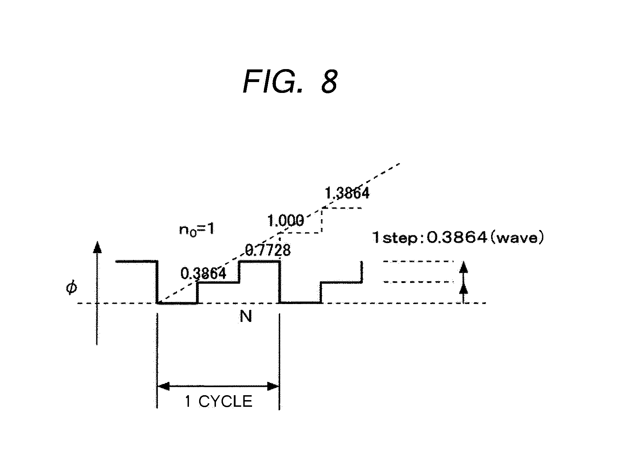

Fig. 8 is a diagram illustrating an example of a phase difference caused to the servo laser beam when such steps are set.

When the depth d of a first step is set to 0.6136 as illustrated in Fig. 7(b), if the refractive indexes n of the DOE 32 with respect to the recording/reproducing laser beam and the servo laser beam are similar to each other, the phase difference $\varphi$ (wave: number of waves) of the servo laser beam caused by the step difference of one step is represented by:

$$\varphi = (1 - 405/660) \times m = 0.3864 \times m$$

Therefore, the phase difference $\varphi$ caused by a first step of the DOE 32 is 0.3864 (wave), and the phase difference $\varphi$ caused by a second step is 0.7728 (wave).

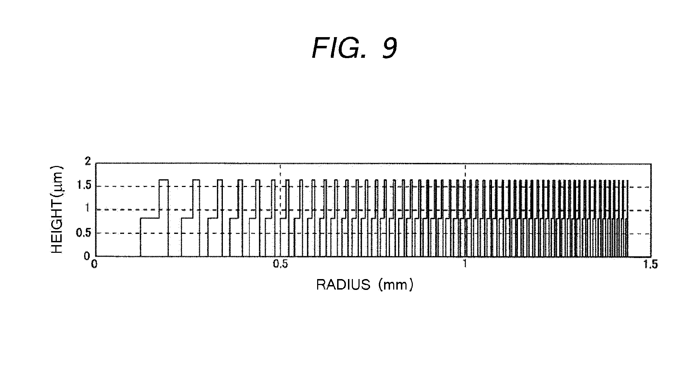

After the wavelength selectivity is achieved by setting the value of the depth d of the step, the overall formed concave-convex pattern of the DOE 32 is set as illustrated in Fig. 9.

As the formed concave-convex pattern for converging the servo laser beam, a pattern such that a concentric circle illustrated in the figure is a base pattern and a pitch of the concave-convex pattern (in this example, a step portion with two steps) is gradually decreased as it goes outward is provided.

In this case, the collimation of the servo laser beam can be arbitrarily adjusted by adjusting the pitch of the formed concave-convex pattern.

[1-5. Magnification setting as embodiment]

- Suppression of a shift of a spot position in tracking direction
- Here, as understood from the description which has been made so far, the recording/reproducing device 10 of the present embodiment is assumed to be structured such that, when performing recording on the bulk-type recording medium:
- the recording/reproducing laser beam and the servo laser beam are irradiated through a common objective lens;
- the focus servo control of the objective lens is performed such that the servo laser beam is focused on the reflection film formed in the optical recording medium;
- the recording/reproducing laser beam and the servo laser beam are focused on different position in the focus direction; and
- the tracking servo control of the objective lens is performed based on the reflected light of the servo laser beam such that the focusing position of the servo laser beam follows the position direction on the reference surface.

When such a structure is adopted, based on the principle previously described with reference to Fig. 32, because of the objective lens shift attributable to the eccentricity of the bulk-type recording medium 1, the shift $\Delta x$ of a spot position in the tracking direction is generated between the servo laser beam and the recording/reproducing laser beam.

Here, such a shift $\Delta x$ of a spot position changes in accordance with a magnification of the recording/reproducing laser beam (hereinafter, denoted by $\beta\_rp$) and a magnification of the servo laser beam (hereinafter, denoted by $\beta\_sv$).

In the present specification, the term "magnification" is defined as follows.

That is, when a distance between an object point OB of the recording/reproducing laser beam (See Figs. 3(a) and 3(c)) when viewed from the objective lens 20, and the principal plane Som of the objective lens 20 is represented by $S_1$ (hereinafter, referred to as $S_1\_rp$), and a distance between the principal plane Som of the objective lens 20 and an image point (focusing position) of the recording/reproducing laser beam by the objective lens 20 is represented by $S_2$ (hereinafter, referred to as $S_2\_rp$), the magnification $\beta\_rp$ of the recording/reproducing laser beam is defined as Expression 1.

[Expression 1]

$$\beta\_rp = \frac{S_1\_rp}{S_2\_rp} \ldots \texttt{[Expression 1]}$$

Similarly, when a distance between an object point OB of the servo laser beam viewed from the objective lens 20, and the principal plane Som of the objective lens 20 is represented by $S_1$ (hereinafter, referred to as $S_1\_sv$), and a distance between the principal plane Som of the objective lens 20 and an image point (focusing position) of the servo laser beam by the objective lens 20 is represented by $S_2$ (hereinafter, referred to as $S_2\_sv$), the magnification $\beta\_sv$ of the servo laser beam is defined as Expression 2.
[Expression 2]

$$\beta\_sv = \frac{S_1\_sv}{S_2\_sv} \ldots \texttt{[Expression 2]}$$

That is, the "magnification" herein refers to a lateral magnification.

The shift $\Delta x$ of a spot position described above is a relation between the magnification $\beta\_rp$ and the magnification $\beta\_sv$, and is represented as follows.
First, when a lens shift amount of the objective lens 20 is represented by dx, displacement amount errors of the focusing positions of the recording/reproducing laser beam and the servo laser beam in the tracking direction, which are caused by the lens shift (the displacement amount error being a difference between the lens shift amount dx and a displacement amount of the focusing position accompanying the shift of the objective lens 20 based on the lens shift amount dx, the displacement amount errors being referred to as displacement amount errors $\delta x\_rp$ and $\delta x\_sv$, respectively) are as follows.
[Expression 3]

$$\delta x\_rp = \frac{1}{\beta\_rp} \times d_x \ldots \texttt{[Expression 3]}$$

[Expression 4]

$$\delta x\_sv = \frac{1}{\beta\_sv} \times d_x \ldots \texttt{[Expression 4]}$$

Accordingly, the shift $\Delta x$ of a spot position between the recording/reproducing laser beam and the servo laser beam which accompanies the lens shift is represented as follows.
[Expression 5]

$$\Delta x = \delta x\_sv - \delta x\_rp = \left( \frac{1}{\beta\_sv} - \frac{1}{\beta\_rp} \right) \times d_x \ldots \texttt{[Expression 5]}$$

Here, as understood by referring to Expression 5, in order that the shift $\Delta x$ of a spot position is decreased, the magnification $\beta\_rp$ of the recording/reproducing laser beam may be closer to the magnification $\beta\_sv$ of the servo laser beam.
Here, in this embodiment, the magnification $\beta\_sv$ of the servo laser beam is adjusted to fall within the range of the magnification $\beta\_rp$ of the recording/reproducing laser beam. That is, the optical system illustrated in Fig. 2 is designed to satisfy the requirement that the magnification $\beta\_sv$ of the servo laser beam falls within the range of the magnification $\beta\_rp$ of the recording/reproducing laser beam.
If the magnification $\beta\_sv$ of the servo laser beam is within the range of magnification $\beta\_rp$ of the recording/reproducing laser beam, a difference between the displacement amount error δx_rp of the focusing position of the recording/reproducing laser beam and the displacement amount error δx_sv of the focusing position of the servo laser beam based on the same lens shift amount dx is decreased, and as a result, the shift Δx of a spot position can be suppressed.

By suppressing the shift Δx of a spot position in this way, the correction of the information recording position p-rec corresponding to the detected result of the lens shift (for example, an optical axis correction of the recording/reproducing laser beam) is enable to effectively work, and as a result, the overlapping or switching of the recording mark train can be more reliably prevented, and realization of a more stable reproduction operation can be achieved.

Furthermore, it is to be noted for confirmation that the magnification β_rp of the recording/reproducing laser beam changes in its value in accordance with the selection of the information recording layer position L in the bulk layer 5. The expression "within the range of the magnification β_rp" means "within a range of the magnification β_rp of the recording/reproducing laser beam which changes in accordance with the selection of the information recording layer position L."

Moreover, as understood from the previous description about Fig. 6, in the case of this example, the magnification β_sv of the servo laser beam changes in accordance with the selection of the information recording layer position L. Accordingly, in the case of this example, the optical system may be designed such that the magnification β_sv (the range of the magnification β_sv) of the servo laser beam which changes with the selection of the information recording layer position L to fall within the range of the magnification β_rp of the recording/reproducing laser beam.

Furthermore, for some reasons, for example, when deterioration of the aberration performance due to the change Δ in the distance Do-rp does not become a problem, even if the servo light focus mechanism 28 is not provided (that is, even when the magnification β_sv of the servo laser beam is fixed), there is no change in that suppression of the shift Δx of a spot position is achieved by setting the magnification β_sv of the servo laser beam to fall within the range of the magnification β_rp of the recording/reproducing laser beam.

- Suppression of a shift of an information recording position in focus direction -

Moreover, in this embodiment, the magnification β_rp and the magnification β_sv are assumed to satisfy the conditions required to suppress the shift Δx of a spot position in the tracking direction, and are also assumed to satisfy the following conditions in order to suppress a shift (Δz) of a information recording position p-rec in the focus direction.

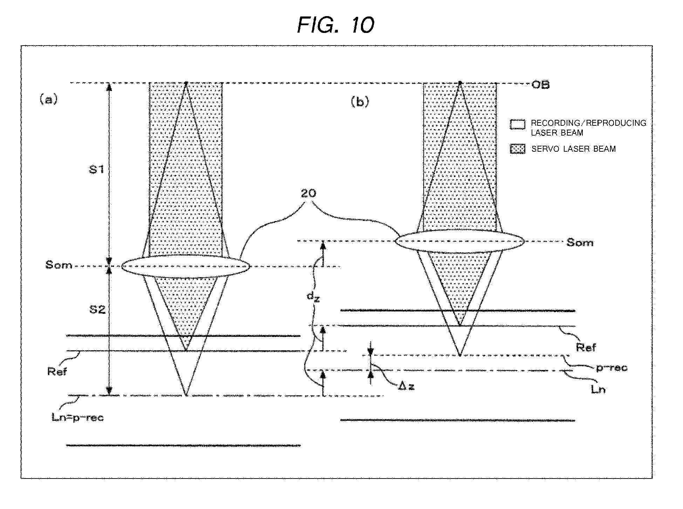

Fig. 10 is a diagram to describe a shift (Δz) of an information recording position in the focus direction.
Fig. 10 (a) shows a relation among the position of the objective lens 20, the position of the reference surface Ref, the information recording layer position Ln which is a recording target position, and the information recording position p-rec (the focusing position of the recording/reproducing laser beam) in an ideal state in which surface wobbling in the bulk-type recording medium 1 has not occurred, and Fig. 10(b) illustrates a relation among the position in a state in which the surface wobbling (the surface wobbling in a direction toward the objective lens 20) has occurred.

First of all, as the premise, the focusing position of the servo laser beam is controlled to be on the reference surface Ref by the focus servo control of the objective lens 20 based on the reflected light of the servo laser beam. That is, the objective lens 20 and the reference surface Ref can be maintained at a certain constant distance under the control of the focus servo control.

In the example illustrated in the figure, since the servo laser beam enters the objective lens 20 as parallel light, when the surface wobbling in the direction illustrated in Fig. 10 (b) is generated by a certain amount $d_z$, the position of the objective lens in the focus direction is shifted by the same amount $d_z$ in the same direction as the surface wobbling direction.

On the other hand, the information recording position p-rec is determined depending on the movement of the concave lens 16 in the recording/reproducing light focus mechanism 15.

As illustrated in Fig. 10 (a), the information recording position p-rec agrees with the information recording layer position Ln serving as a recording target position in the ideal state being free from the surface wobbling.

Here, when the surface wobbling is generated by the amount $d_z$ as described above, in order to allow the focusing position of the servo laser beam and the reference surface Ref to agree with each other, the objective lens 20 is moved by the amount $d_z$ in the direction in which the surface wobbling is generated, but the focusing position of the recording/reproducing laser beam (the information recording position p-rec) is not necessarily shifted by the amount $d_z$ even though the objective lens is moved by the amount $d_z$. This is attributable to a difference in a degree of collimation between the servo laser beam and the recording/reproducing laser beam that enter the objective lens 20 (in this case, the difference between parallel light and non-parallel light). That is, since there is a difference in a degree of collimation between the servo laser beam and the recording/reproducing laser beam that enter the objective lens 20 as described above, it results in a difference in displacement amount of focusing position between the servo laser beam and the recording/reproducing laser beam, even based on the same amount of driving of the objective lens 20.

As a result, depending on the surface wobbling, defocus (the shift from the information recording position Ln as a recording target) indicated by "Δz" in Fig. 10 (b) is caused in the information recording position p-rec (the focusing position of the recording/reproducing laser beam).

As the defocus (the shift of the information recording position p-rec in the focus direction) $\Delta z$, a type of defocus directed toward the front side (to the upper layer side) in comparison with the information recording layer position Ln which is the recording target occurs when the surface wobbling shown in Fig. 10(b) has occurred in a direction of approaching the objective lens 20, and conversely a type of defocus directed toward the back side in comparison with the information recording layer position Ln which is the recording target occurs when the surface wobbling has occurred in the direction of retreating from the objective lens 20.

If the defocus $\Delta z$ corresponding to the surface wobbling occurs, there is a concern that the information recording positions p-rec of adjacent layers overlap each other depending on the settings of the magnitude of the surface wobbling and the layer pitch of the information recording layer positions L. If this is the case, it becomes difficult to correctly reproduce the recorded signals.

Here, as a measure to avoid such a problem related to the defocus $\Delta z$, a measure that the layer pitch of the respective layers is increased to be equal to or greater than a variation of the information recording position p-rec due to the surface wobbling can be considered.

However, this technique cannot densely pack the respective layers in the focus direction and thus is difficult to increase the recording capacity.

Moreover, as another measure to avoid the problem related to the defocus $\Delta z$, there is a method of adopting a system in which a disc can be detachable and attachable.

Here, the distortion of a disc may be one of the causes of the surface wobbling. However, the distortion of the disc includes a distortion caused when a disc is clamped by a rotating and driving unit, a distortion caused by intrusion of dust onto the clamping surface, and a distortion caused by complex factors. Accordingly, when a system is structured such that the disc is not detachable and attachable, the influence of the surface wobbling on each of the layers may be even, so that it is possible to avoid the problem that the recorded signals are duplicated in each of the layers. Accordingly, the respective layers can be packed densely in the focus direction, and as a result, the recording capacity can be corresponding increased.

However, since this technique does not allow replacement of the disc at all, for example, when disc failure occurs, the measure of replacing only the failed disk cannot be taken. Moreover, data recorded by a certain recording device cannot be read by a different recording device. That is, from the viewpoint of these, it is disadvantageous in terms of convenience in use.

Accordingly, the present embodiment is structured to satisfy the conditions of the magnifications $\beta\_rp$ and $\beta\_sv$ for solving these problems.

Here, the defocus $\Delta z$ shown in Fig. 10 is also changed in accordance with the relation between the magnification $\beta\_rp$ and the magnification $\beta\_sv$.

Specifically, first, when the amount of the surface wobbling is defined as $d_z$, the defocus amount of the recording/reproducing laser beam $\delta z\text{-}rp$ and the defocus amount of the servo laser beam $\delta z\_sv$ which accompany the displacement of the objective lens 20 due to the surface wobbling are separately considered as follows: Here, the defocus amount $\delta z$ refers to the value of a difference between the surface wobbling amount $d_z$ and the displacement amount of the focusing position when the objective lens 20 is moved by the amount $d_z$.

[Expression 6]

$$\delta z\_rp = \frac{1}{\beta\_rp^2} \times d_z \ldots [\text{Expression 6}]$$

[Expression 7]

$$\delta z\_sv = \frac{1}{\beta\_sv^2} \times d_z \ldots [\text{Expression 7}]$$

In this case, when paying attention to the defocus amount $\delta z\_sv$ of the servo laser beam, if the servo laser beam enters the objective lens 20 as parallel light as previous described with reference to Fig. 10 (that is, $\beta\_sv=\infty$), the defocus amount $\delta z\_sv$ becomes 0 by [Expression 7]. Therefore, when $\beta\_sv = \infty$, it is sufficient that the focus servo absorbs only a component of the surface wobbling, and the objective lens 20 is moved by the amount $d_z$ (See Fig. 10(b)). In this way, when $\beta\_sv = \infty$, since the amount of the surface wobbling is $d_z$ and the objective lens 20 is moved by the amount $d_z$,

the defocus $\Delta z$ which is the shift of the information recording position p-rec based on the recording/reproducing laser beam becomes $\Delta z = 1/\beta\_rp^2 \times d_z$ by [Expression 6].

On the other hand, when the servo laser beam enters as converging light or diverging light, the defocus amount $\delta z\_sv$ of the servo laser beam based on [Expression 7] does not become 0, so that the focus servo in this case follows the surface wobbling and absorbs the defocus amount $\delta z\_sv$. That is, the objective lens 20 of this case is moved by an amount of $d_z + \delta z\_sv$, that is, an amount of $d_z + 1/\beta\_sv^2 \times d_z$.

As a result, it can be said that the objective lens 20 is moved by an amount of "$d_z + \delta z\_sv$" in accordance with occurrence of the surface wobbling of the amount $d_z$. That is, the defocus $\Delta z$ of the recording/reproducing laser beam generated by moving the objective lens 20 is represented by [Expression 8].

[Expression 8]

$$\Delta z = \frac{1}{\beta\_rp^2} \times \left( d_z + \frac{1}{\beta\_sv^2} \times d_z \right) \ldots \text{[Expression 8]}$$

Here, when it is possible to reduce the amount of the defocus $\Delta z$ attributable to the surface wobbling to a negligible amount, the shift of the information recording position p-rec can be reduced to be negligible. In view of this, in the present embodiment, the magnification $\beta\_rp$ and the magnification $\beta\_sv$ are set such that the defocus $\Delta z$ due to the surface wobbling is equal to or less than the depth of focus of the recording/reproducing laser beam as follows.

It is to be noted for confirmation that, when the wavelength of the recording/reproducing laser beam is defined as $\lambda$ and the aperture number of the objective lens 20 (the aperture number with respect to the recording/reproducing laser beam) is defined as NA, the depth of focus of the recording/reproducing laser beam is represented as follows. [Expression 9].

$$\frac{\lambda}{NA^2} \ldots \text{[Expression 9]}$$

Based on [Expression 8], when suppressing the defocus $\Delta z$, which accompanies the surface wobbling, to the depth of focus or less,
[Expression 10]

$$\frac{1}{\beta\_rp^2} \times \left( d_z + \frac{1}{\beta\_sv^2} \times d_z \right) \leq \frac{\lambda}{NA^2} \ldots \text{[Expression 10]}$$

needs to be satisfied.

In this case, regarding the amount of the surface wobbling $d_z$, the maximum amount D may be considered. Specifically, for example, the allowable maximum amount of surface wobbling specified by the standard of the bulk-type recording medium 1 may be considered.

In this way, when the maximum amount of the surface wobbling is defined as D, and the depth of focus $\lambda/NA^2$ is defined as by $\alpha$, [Expression 10] is rewritten into [Expression 11].
[Expression 11]

$$\frac{1}{\beta\_rp^2} \times \left( D + \frac{1}{\beta\_sv^2} \times D \right) \leq \alpha \ldots \text{[Expression 11]}$$

When it is summarized, resulting in
[Expression 12]

$$\frac{1}{\beta\_rp^2}\left(1+\frac{1}{\beta\_sv^2}\right)D \leq \alpha \ldots \text{[Expression 12]}$$

In the present embodiment, the optical system illustrated in Fig. 2 is designed to also meet the conditions of [Expression 12]. With such a design, it is possible to suppress the amount of the defocus $\Delta z$ generated due to the surface wobbling during the recording operation to the extent of the depth of focus or less.

Since the amount of the defocus $\Delta z$ is suppressed to a very small value, as small as the depth of focus or less, the problem that the information recording positions p-rec overlap each other between adjacent layers due to the surface wobbling does not occur, and the recording signal can be appropriately reproduced.

Furthermore, since the amount of the defocus $\Delta z$ which is generated is suppressed to a very small value, it is possible to reduce the layer pitch between the respective information recording layer position L, and hence is possible to achieve an increase in recording capacity.

Furthermore, if the amount of the defocus $\Delta z$ which is generated is suppressed to a very small value, it is possible to allow detachment of the bulk-type recording medium 1, and thus is possible to prevent the convenience in use from being impaired. For example, it is possible to prevent a system in which the attachment and detachment of a disc such as a Hard Disc Drive (HDD) is not allowed from being constructed.

Here, a technique can be further considered which detects a displacement amount of the obj ective lens 20 accompanying the surface wobbling, and offsets the shift of the focusing position of the recording/reproducing laser beam in accordance with the detection result to correct the defocus $\Delta z$ caused due to the surface wobbling. In such a correction, suppression of the amount of the defocus $\Delta z$ to a very small value may have an advantageous effect.

Incidentally, referring to [Expression 12] previously described, it can be understood that it is desirable that the absolute value of the magnification $\beta$ is as large as possible in suppressing the amount of defocus $\Delta z$ generated.

Here, as previously described with reference to Fig. 3, in the present embodiment, the adjustment of the focusing position which aims at the information recording layer position L as a target is performed by setting the state of the parallel light $\beta\_rp = \infty$) as the reference state and changing the recording/reproducing laser beam entering the objective lens 20 into converging light or diverging light.

With such an operation, the absolute value of the magnification $\beta\_rp$ can be set to a large value, and thus an optical system in which can reduce the defocus $\Delta z$ can be advantageously designed.

As previously described, the magnification $\beta$ is defined as a ratio of a distance $S_1$ between an object point OB viewed from the objective lens 20 and a principal plane Som of the objective lens 20, to a distance $S_2$ between the principal plane Som of the objective lens 20 and an image point of the recording/reproducing laser beam ($\beta = S_1/S_2$).

When considering the magnification $\beta\_rp$ in the state the recording/reproducing laser beam enters the objective lens 20 in the form of diverging light as illustrated in Fig. 3(a) and the focusing position is set in the state, in this case, the object point OB of the recording/reproducing laser beam viewed from the objective lens 20 is assumed to be a position indicated by a black circuit in the figure. In this case, the distance $S_1$ has a positive value.

If the concave lens 16 is moved from the state illustrated in Fig. 3(a) to the direction of the objective lens 20 (that is, the diverging angle of the recording/reproducing laser beam is increased: the information recording layer position L on the more lower layer side is selected), the value of the distance $S_1$ is more decreased. On the other hand, the value (positive value) of the distance $S_2$ is more increased.

As understood even from this, when performing adjustment of the focusing position by making the recording/reproducing laser beam enter the objective lens 20 as diverging light and by adjusting the diverging angle, the method of selecting the layer position on the more lower side can change the value of the magnification $\beta\_rp$ to a smaller value than the mode of increasing the diverging angle. In other words, as the diverging angle is decreased to an as small value possible so that the light approximates the parallel light as closely as possible (that is, as the layer position on the more upper layer side is selected), the value of the magnification $\beta\_rp$ is changed to a larger value.

On the other hand, if the recording/reproducing laser beam enters the objective lens 20 as converging light as illustrated in Fig. 3(c), the object point OB of the recording/reproducing laser beam viewed from the objective lens 20 is assumed to be a position indicated by a block circuit in the figure. In this case, the distance $S_1$ has a negative value.

If the convex lens 16 is moved from the state illustrated in Fig. 3(b) in a direction of moving away the objective lens 20 (that is, the converging angle of the recording/reproducing laser beam is increased to an as large value as possible: the layer position on the more upper layer side is selected, the value (absolute value) of the distance $S_1$ is changed to a smaller value. On the other hand, the value (positive value) of the distance $S_2$ is more increased.

Therefore, in the adjustment toward the side such that the recording/reproducing laser beam is adjusted to enter the objective lens 20 as converging light, and the focusing position is adjusted by adjustment of the converging angle, as the converging angle is increased to become larger, (as the layer position on the more upper layer side is selected), the value (absolute value) of the magnification $\beta\_rp$ becomes smaller. Conversely, as the converging angle becomes smaller so that the incident light approximates the parallel as close as possible (that is, the layer position on the far lower side is selected), the value of magnification β_rp (absolute value) becomes larger.

As understood from the above description, according to the present embodiment in which the adjustment of the focusing position toward the information recording layer position L is performed by converting the recording/reproducinglaser beam entering the objective lens 20 from parallel light (β = ∞) being the reference state into converging light or diverging light, it is possible to set the magnification β_rp to a larger absolute value, and as a result, an optical system which can reduce the defocus Δz can be more advantageously designed.

Here, in the present embodiment, since the information recording layer position L disposed in an almost midway point in the bulk layer 5 is set as the reference layer position Lpr, when selecting a layer among the layers of from the uppermost information recording layer position L1 to the lowermost information recording layer position L20, it is possible to suppress a width of a change of the magnification β_rp to a small value. That is, because of this point, designing of an optical system that can reduce the defocus Δz can be advantageously performed.

It is to be noted for confirmation that the most disadvantageous point is in designing the optical system in which the defocus Δz is small is that, since the reference layer position Lpr is set to the uppermost information recording layer position L1 or the lowermost information recording layer position L20, for example, the adjustment of the focusing position is performed by changing the recording/reproducing laser beam that enters the objective lens 20 only within the range of from parallel light to diverging light or within the range of from parallel light to a convergent light.

Therefore, in order to relatively advantageously design the optical system in which the defocus Δz is small in comparison with those states, at least, the recording/reproducing laser beam is adjusted to enter the objective lens 20 as a converting light when the focusing position of the recording/reproducing laser beam is in the state of being adjusted to the uppermost information recording layer position L1, and conversely the recording/reproducing laser beam may be adjusted to enter the objective lens 20 as diverging light when the focusing position of the recording/reproducing laser beam is in the state of being adjusted to lowermost information recording layer position L20.

In other words, the adjustment of the focusing position within a range of from the uppermost information recording layer position L1 to the lowermost information recording layer position L20 included in the bulk layer 5 may be performed by changing the recording/reproducing laser beam entering the objective lens 20 from parallel light being the reference state to converging light or diverging light.

- Specific example of setting of magnification -

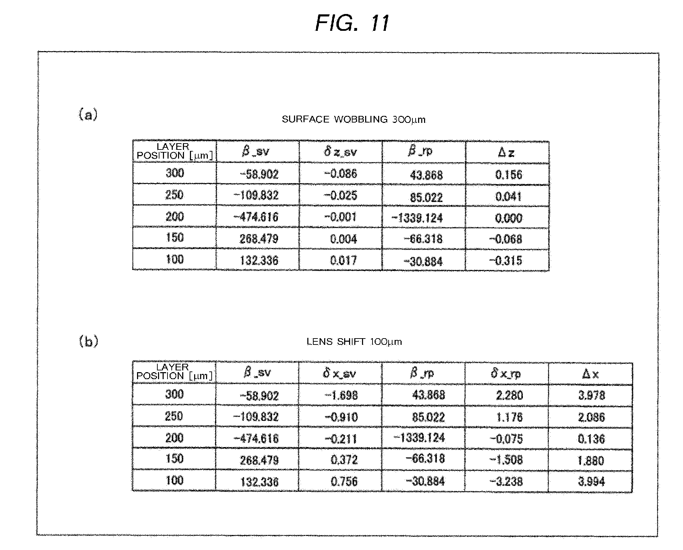

Fig. 11 is a diagram to describe an example of settings of the magnification β_rp and the magnification β_sv that satisfy magnification setting conditions as the present embodiment described above.

Fig. 11(a) shows a value of the magnification β_sv, a value of the magnification β_rp, a value of the defocus amount δz_sv, and a value of the defocus Δz for each layer position which is disposed at every 50 μm within the range of from the information recording layer position L1 (at a distance of 100 μm from the surface) to the information recording layer position L20 (at a distance of 300 μm from the surface). Here, the shown defocus amount δz_sv and the defocus Δz represents numerical values for the case where the surface wobbling amount $d_z$ = 300 μm.

Moreover, Fig. 11(b) similarly shows a value of the magnification β_sv and a value of the magnification β_rp for each level position at every 50 μm, a value of a displacement amount error δx_rp of the focusing position of the recording/reproducing laser beam and a value of a displacement amount error δx_sv of the focusing position of the servo laser beam for each level position when a lens shift amount dx = 100 μm, and a value of the shift Δx of the spot position.

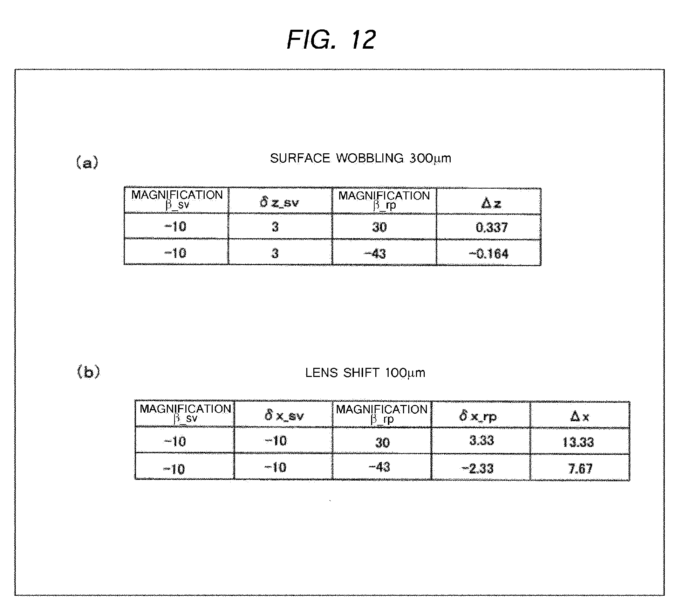

Moreover, as a comparison example, Fig. 12 shows the result when the magnification β_rp and the magnification β_sv that do not satisfy the magnification setting conditions of the present embodiment.

Fig. 12 (a) shows calculation results of the defocus amount δz_sv and the defocus Δz for a combination of the magnification β_rp = 30 times and the magnification β_sv = -10 times and a combination of the magnification β_rp = 43 times and the magnification β_sv = -10 times when the surface wobbling amount $d_z$ = 300 μm.

Moreover, Fig. 12(b) shows calculation results of focusing position displacement amount errors δx_rp and δx_sv, and the shift Δx of a spot position for a combination of the magnification β_rp = 30 times and the magnification β_sv = -10 time and a combination of the magnification β_rp = 43 times and the magnification β_sv = -10 times when the lens shift amount dx=100 μm.

First, as illustrated in Fig. 11, a range of the magnification β_rp of the recording/reproducing laser beam in this case is -30.884 to 43.868. However, the magnification β_sv of the servo laser beam is adjusted to -58.902 to 132.336. Therefore, it is understood that the magnification β_sv of the servo laser beam is within the range of the magnification β_rp of the recording/reproducing laser beam.

By setting the magnification β_sv to be within the range of the magnification β_rp like this, as shown in Fig. 11 (b), the shifts Δx of a spot position are as follows: 3.978 μm for a layer position of 300 μm, 2.086 μm for a layer position of 250 μm, 0.136 μm for a layer position of 200 μm, 1.880 μm for a layer position of 150 μm, and 3.994 μm for a layer position 100 μm.

As a result, it is understood that the shift of a spot position is dramatically decreased in comparison with $\Delta x = 13.33$ $\mu$m at $\beta\_rp = 30$ and $\beta\_sv = -10$ and $\Delta x = 7.67$ $\mu$m at $\beta\_rp = -43$ and $\beta\_sv = -10$ shown in Fig. 12 (b).

Moreover, in the present embodiment, the optical system is designed such that the conditions in [Expression 12] previously mentioned are satisfied.

Therefore, as shown in Fig. 11(a), the defocus $\Delta z$ as the shift of the information recording layer position p-rec in the focus direction is as follows: 0.156 $\mu$m for a layer position of 300 $\mu$m; 0.041 $\mu$m for a layer position of 250 $\mu$m; 0.000 $\mu$m for a layer position of 200 $\mu$m; -0.068 $\mu$m for a layer position of 150 $\mu$m; and -0.315 $\mu$m for a layer position of 100 $\mu$m. It can be understood that this result shows small values compared to the case in which $\Delta z = 0.337$ $\mu$m at $\beta\_rp = 30$ and $\beta\_sv = -10$ and $\Delta z = -0.164$ $\mu$m at $\beta\_rp = -43$ and $\beta\_sv = -10$ shown in Fig. 12(a).

[1-5. Second role of DOE]

Here, the present embodiment is based on the premise that a recording medium in which the reference surface Ref is provided in an upper layer compared to the bulk layer 5 is used as the bulk-type recording medium 1, but when the bulk-type recording medium 1 in which the reference surface Ref is provided in an upper layer compared to the bulk layer 5 is used as a target, the DOE 32 is essentially provided.

The reason of this is that, when the DOE 32 is not provided, it is impossible to satisfy the requirement that the magnification $\beta\_sv$ of the servo laser beam is within the range of the magnification $\beta\_rp$ of the recording/reproducing laser beam.

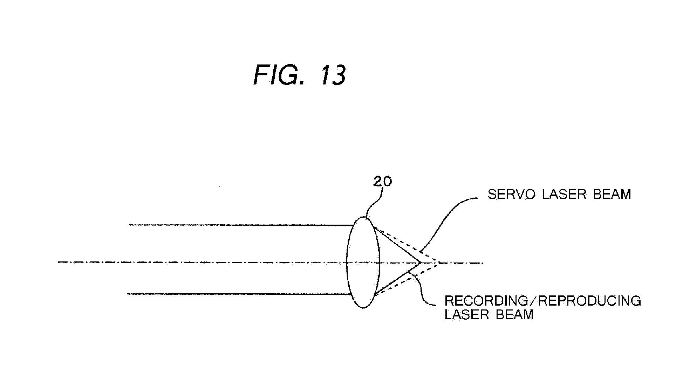

Fig. 13 illustrates, by way of example, a focal position of each light in a state in which each of the recording/ reproducing laser beam (indicted by solid line) and the servo laser beam (indicated by broken line) enters the objective lens 20 as parallel light.

Generally, as for a refractive index of the objective lens 20, a refractive index with respect to the recording/reproducing laser beam (wavelength = about 405 nm) is greater than a refractive index with respect to the servo laser beam (wavelength = about 650 nm). Therefore, as shown in Fig. 13, the focal position of the servo laser beam is likely to be formed on the interior side (more lower side) compared to the focal position of the recording/reproducing laser beam.

Since the focal position of the servo laser beam is on the more interior side like this, in order to focus the servo laser beam on the reference surface Ref which is on the upper layer side of the bulk layer 5 (that is, in order to focus it on the more upper layer side than the focusing position of the recording/reproducing laser beam), it is necessary to set the converging angle of the servo laser beam entering the objective lens 20 to be larger than the converging angle of the recording/reproducing laser beam.

As understood even from this point, when the reference surface Ref is provided on the more upper layer side than the bulk layer 5, it is difficult to make the magnification $\beta\_sv$ of the servo laser beam fall within the magnification $\beta\_rp$ of the recording/reproducing laser beam without the DOE 32 which converges the servo laser beam.

That is, in other words, according to the present embodiment which is equipped with the DOE 32, when dealing with the case of using, as a target, the bulk-type recording medium 1 in which the reference surface Ref is provided on the more upper layer side than the bulk layer 5, the requirement that the magnification $\beta\_sv$ of the servo laser beam should be within the range of the magnification $\beta\_rp$ of the recording/reproducing laser beam can be satisfied.

<2. Second embodiment>

Subsequently, a second embodiment will be described.

The recording/reproducing device (optical drive device) of the second embodiment is further provided with a function of suppressing generation of comatic aberration generated in the recording/reproducing laser beam which is attributable to the lens shift of the objective lens 20, compared to the recording/reproducing device of first embodiment. Specifically, when the recording/reproducing laser beam enters the objective lens 20 in a state of a non-parallel light, it is to achieve suppression of the comatic aberration generated in the recording/reproducing laser beam.

Further, since an optical recording medium as a recording target of the second embodiment is similar to that of the bulk-type recording medium 1 of the first embodiment, the description thereof is not duplicated.

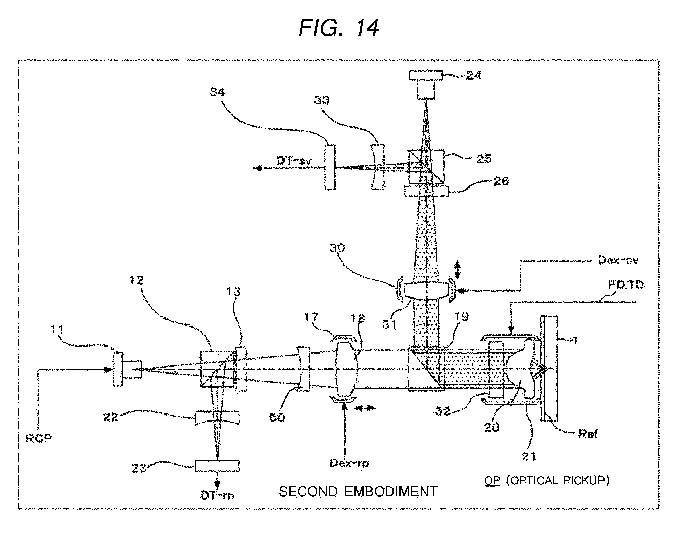

Fig. 14 is a diagram illustrating an internal structure of an optical pickup included in the recording/reproducing device (optical drive device) of the second embodiment (and also illustrating a bulk-type recording medium 1).

Further, since structures of portions of the recording/reproducing device of the second embodiment except for an optical pickup OP are the same as those of the case of the recording/reproducing device 10 of the first embodiment which has been previously described with reference Fig. 4, those are not illustrated.

Moreover, some portions of the second embodiment about which the description has been already made in connection with the first embodiment are denoted by the same reference signs and the description is not duplicated.

In Fig. 14, the optical pickup OP of this case is changed from the optical pickup OP illustrated in Fig. 2, regarding a portion related to the recording/reproducing light focus mechanism 15 and a portion related to servo light focus mechanism 28.

Specifically, in this case, while a collimating lens 14 and a concave lens 16 are not provided, a fixed lens 50 is provided. As illustrated in the figure, a lens driving unit 18 is structured to drive a convex lens 18 to move.

Moreover, in the portion related to the servo laser beam, while a collimating lens 27 and a concave lens 29 are not provided, a lens driving unit 30 is structured to drive a convex lens 31 to move.

In the second embodiment, after the fixed lens 50 is inserted in the middle of an optical path between an objective lens 20 and a recording/reproducing laser 11 which is a light source of the recording/reproducing laser beam, a predetermined amount of spherical aberration is generated by the fixed lens 50.

Moreover, in the second embodiment, besides this, a predetermined amount of spherical aberration is generated in the middle of an optical path between the objective lens 20 and the focal position of the recording/reproducing laser beam and this suppresses the comatic aberration generated in the recording/reproducing laser beam when the recording/ reproducing laser beam enters the objective lens 20 a state of non-parallel light.

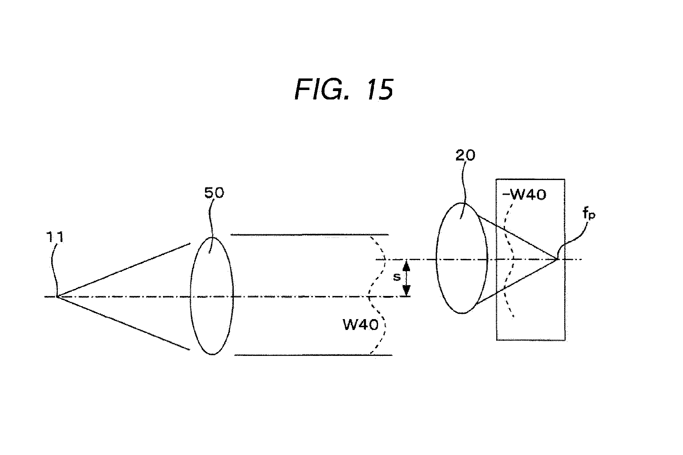

Fig. 15 is a diagram to describe a technique of suppressing the comatic aberration in the second embodiment. For example, as illustrated in Fig. 15, a spherical aberration of W40 is generated in the optical path between the recording/ reproducing laser 11 and the objective lens 20, by the fixed lens 50, and the spherical aberration of -W40 is generated in the optical path between the objective lens 20 and the focal position (denoted by fp in the figure) of the recording/ reproducing laser beam.

Furthermore, the spherical aberration of -W40 within the optical path between the objective lens 20 and the focal position fp can be generated by adjusting a Working Distance (hereinafter, referred to as WD) of the objective lens 20, that is, a distance from the objective lens 20 to the front surface of the bulk-type recording medium 1.

When an amount of lens shift of the objective lens 20 is zero, the spherical aberrations are offset each other. On the other hand, when the objective lens 20 is shifted, for example, by a distance S, that is, the lens shift occurs, as illustrated in the figure, a difference is generated between the spherical aberration in the optical path from the recording/ reproducing laser 11 to the objective lens 20 and the spherical aberration in the optical path from the objective lens 20 to the focal position fp.

In the second embodiment, the comatic aberration is caused by the difference between the spherical aberrations, and this comatic aberration serves as a factor to suppress the comatic aberration generated in the recording/reproducing laser beam when the recording/reproducing laser beam enters the objective lens 20 in a state of non-parallel light.

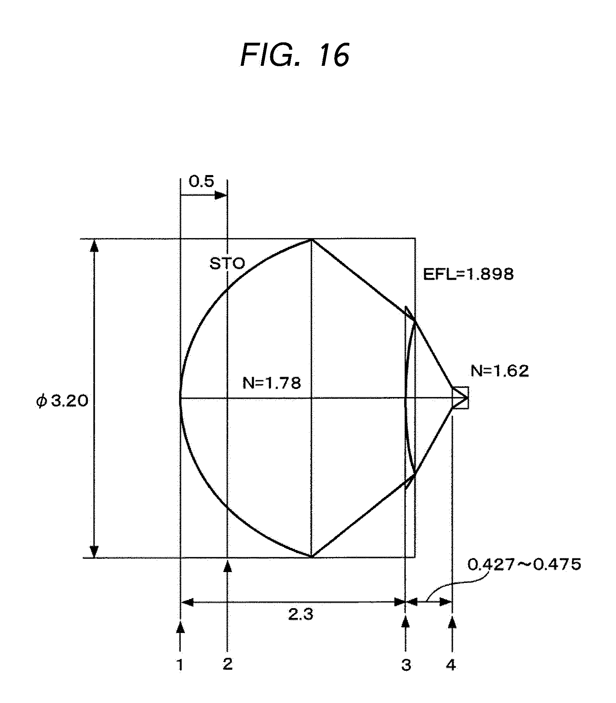

Figs. 16 to 19 and 21 are diagrams to describe design values of a specific optical system which are set such that suppression of the comatic aberration is achieved by the above technique.

First, Fig. 16 is a diagram to describe specific design values of the objective lens 20.

The objective lens 20 is made of a glass material, and is 3.2 mm in a lens diameter, and 2.3 mm in a distance from a first surface to a third surface, that is, in a lens thickness, for example, in the optical axis. Moreover, a distance from the apex of the first surface to a second surface serving as a STO (diaphragm) surface is 0.5 mm. An effective depth of focus is 1.62 mm.

Here, a fourth surface in the figure is the front surface of the bulk-type recording medium 1, and a distance from the fourth surface to the third surface means the WD described above.

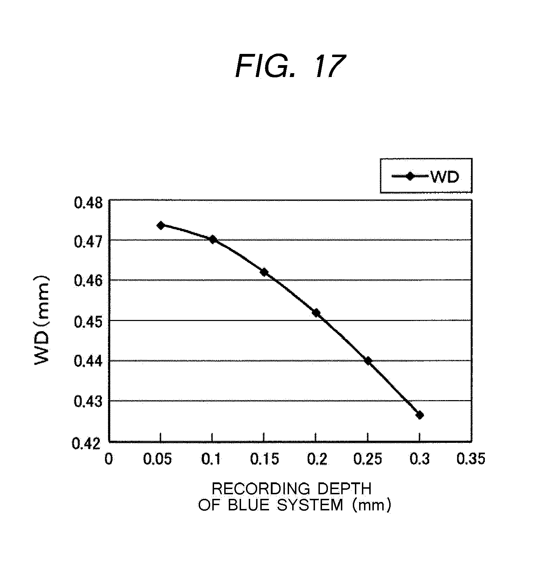

Next, as illustrated in Fig. 17, in the case of the present example, when the range of the recording position (a recording depth of a blue system in the figure) of the recording/reproducing laser beam is 0.05 mm to 0.30 mm, the WD is set to a range of 0.475 mm to 0.427 mm.

Hereinbelow, a specific design example of the objective lens 20 is described.

Surface data
Surface number
Radius of curvature
Surface interval
Refractive index (405 nm)
Refractive index (660 nm) 1 1.72407 0.5 1.78006964 1.7503
2(STO) ∞ 1.8
3 1.390896 0. 46 1.0
4 ∞ 0.1 1.62

Aspheric surface data

First surface

K = 0.0000, A2 = 6.033061E-02, A4 = 4.110059E-03, A6 = 1.577992E-04, A8 = 3.361266E-04

Third surface

K = 0. 0000, A2 = -3.130214E-01, A4 = 2 .320173E-01, A6 = -2.841429E-01, A8 = 1.483011E-01

Moreover, in the concave lens 18, the surface on the side near the light source (on the side near the recording/reproducing laser 11) is defined as the first surface, and the surface on the opposite side (the surface on the side near the objective lens 20) is defined as the second surface, and the concave lens 18 is designed as follows.

Surface data
Surface number
Radius of curvature
Surface interval
Refractive index (405 nm)
1 43.20333 3.5 1.5071781
2 -7.841247
Aspheric surface data
First surface
K = 0.0000, A2 = -9.312825E-06, A4 = -1.015113E-05
Second surface
K = 0.875969, A2 = 4.279362E-04, A4 = 4.787842E-06

In the fixed lens 50, similarly when the surface on the side near the light source is defined as the first surface, and the opposite surface is defined as the second surface, the fixed lens is designed as follows.

Surface data
Surface number
Radius of curvature
Surface interval
Refractive index (405 nm)
1 ∞ 0.5 1.53019593
2 ∞
Aspheric surface data
Second surface
A2 = 5.0017045E-03, A4 = -1.0916955E-03, A6 = 1.3797693E-3

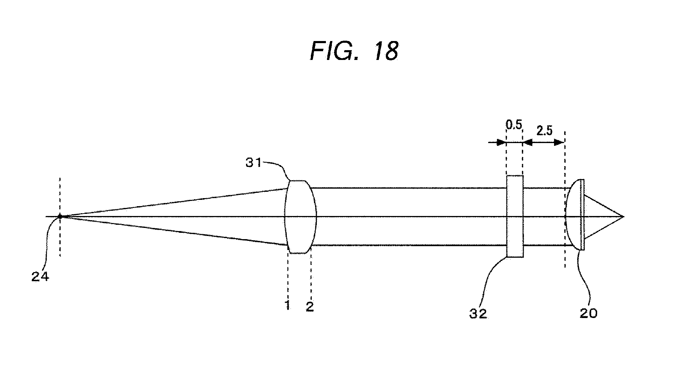

Moreover, Fig. 18 is a diagram to describe a design example of the portion related to the servo laser beam in the second embodiment, and specifically and schematically illustrates a relation among the servo laser 24, the convex lens 31, the DOE 32, and the objective lens 20 which are disposed on the optical path of the servo laser beam. First, a thickness of the DOE 32 is set to 0.5 mm as in the figure. Moreover, a distance from the apex of the first surface of the objective lens 20 to the DOE 32 is set to 2.5 mm.

Moreover, as illustrated, regarding the convex lens 31, when the surface near the light source is defined as a first surface, and the opposite surface is defined as a second surface, a design example of the convex lens 31 is as follows.

Surface data
Surface number
Radius of curvature
Surface interval
Refractive index (660 nm)
1 54.3000 3.001.495051
2 -10.9065
Aspheric surface data
First surface
K = 0.0000
Second surface
K = -0.87200

Here, in the second embodiment, the DOE 32 is assumed to be provided with a function of converting the servo laser beam and a function of correcting the spherical aberration with respect to the servo laser beam. First, as understood from the description related to Figs. 6(a) to 6(c), in the embodiment, the working distance (WD) of the objective lens 20 is changed to suppress a change in the distance Do-rp between the principal plane Som of the objective lens 20 and the focusing position of the recording/reproducing laser beam and to achieve an improved in the aberration performance of the recording/reproducing laser beam. However, as understood with reference to Figs. 6 (a) to 6(c) , the change in the WD also accompanies a change in the distance (hereinafter, referred to as a distance Do-sv) between the principal plane Som and the focusing position of the servo laser beam. That is, due to the change in the distance Do-sv, the aberration performance on the servo laser beam side is deteriorated.

In order to prevent this, in the second embodiment, the DOE 32 is provided with the function of correcting the spherical aberration with respect to the servo laser beam.

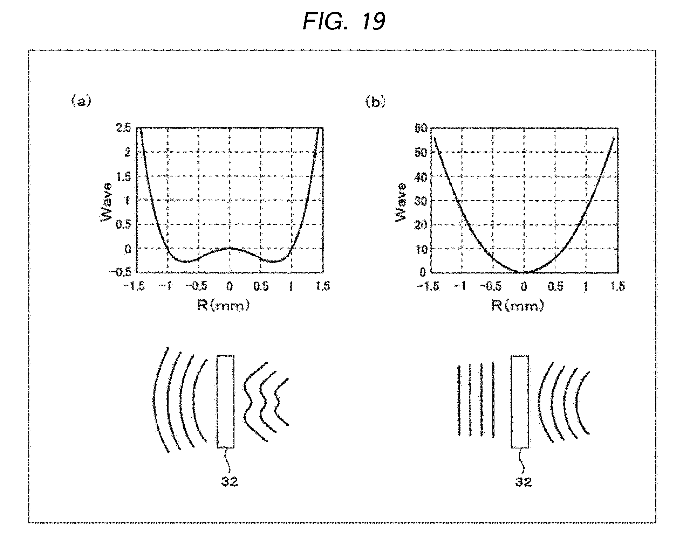

Fig. 19 is a diagram to describe a behavior of phase shift (phase shift according to radius position R) of the servo laser beam to be given by the DOE 32 for the purpose of enabling the DOE 32 to implement both of the functions of converging the servo laser beam and correcting the spherical aberration.

Fig. 19(a) illustrates a simulation result (upper portion) related to a behavior of phase shift of the servo laser beam to be given for the purpose of implementation of only the function of correcting the spherical aberration, and also illustrates an image (lower portion) of a change in wavefront of the servo laser beam before/after the servo laser beam has passed through the DOE 32.

Fig. 19(b) illustrates a simulation result (upper portion) related to a behavior of phase shift of the servo laser beam to be given for the purpose of implementation of the function of correcting the spherical aberration and the function of converging light, and also illustrates an image (lower portion) of a change in wavefront of the servo laser beam before/after the servo laser beam has passed through the DOE 32.

In the present example, a formed pitch (period) and a formed pattern of a concave-convex pattern of the DOE 32 (See Fig. 9) are set such that the phase shift having the behavior illustrated in Fig. 19(b) can be given to the servo laser beam.

As a result, both of the function of converging the servo laser beam and the function of correcting the spherical aberration with respect to the servo laser beam are implemented by the DOE 32.

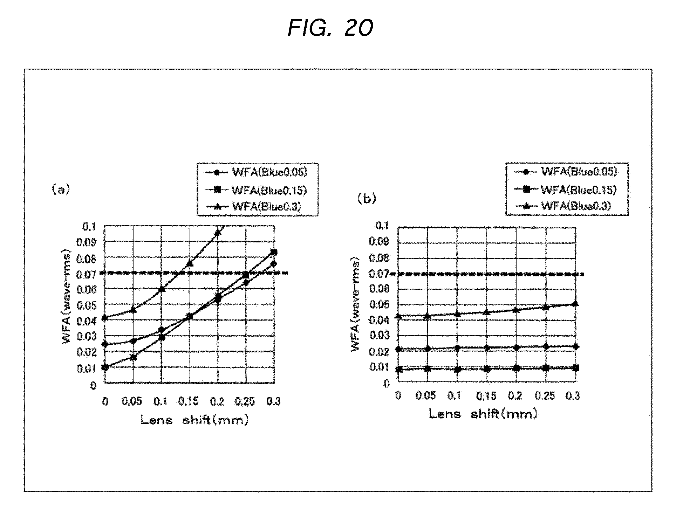

Fig. 20 is a diagram to describe the effect of a case where the DOE 32 of the present example is used.

As a comparison, Fig. 20(a) illustrates a simulation result of WAveFront Aberration (WFA: wave-rms unit) with respect to a lens shift amount (mm) when the DOE 32 has only the function of converging light.

Next, Fig. 20 (b) illustrates a result of similar simulation when the DOE 32 as the second embodiment which has been described above is used.

In these Figs. 20 (a) and 20 (b), the plot of ♦ indicates a result for a case where a recording depth by the recording/reproducing laser beam is 0.05 mm, and the plot of ■ indicates a result for a case where a recording depth by the recording/reproducing laser beam is 0.15 mm. Further, the plot of ▲ indicates a result for a case where a recording depth by the recording/reproducing laser beam is 0.3 mm.

Here, when an amount of the eccentricity that can be actually generated in the bulk-type recording medium 1 is considered, the maximum value of the lens shift amount of the objective lens 20 to follow the displacement of track due to the eccentricity is about 0.1 mm. When a margin due to an error of the biaxial actuator 21 or the like is additionally considered, the maximum value of the lens shift amount is assumed to be about 0.15 mm.

When seeing based on this lens shift amount = 0.15 mm, in the case of Fig. 20(a) where the spherical aberration correction function is not given to the DOE 32, the wavefront aberration exceeds 0.07 wave-rms corresponding to Marechal standard aberration (Marechal Criterion) at a record depth of 0.3 mm.

Compared with this, in the case of the present example illustrated in Fig. 20(b), it is confirmed that the wavefront aberration is improved for all recording depths, for example, 0.05 mm, 0.15 mm, 0.3 mm, etc., in comparison with the case of Fig. 20 (a) and moreover the wavefront aberration is suppressed to below 0.07 wave-rms when the lens shift amount is within a range of 0.30 mm or below for the cases of those recording depths.

From this result, it can be understood that the wavefront aberration of the servo laser beam can be excellently suppressed by the DOE 32 according to the second embodiment.

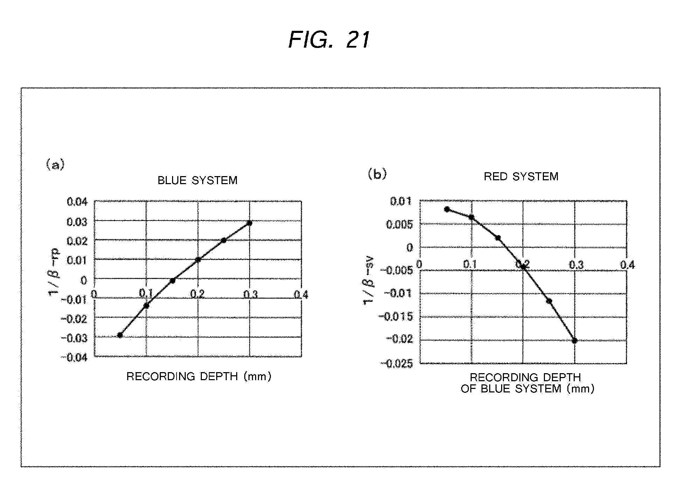

Subsequently, referring to Fig. 21, the magnification $\beta\_rp$ (see Fig. 21(a)) of the recording/reproducing laser beam and the magnification $\beta\_sv$ (see Fig. 21 (b)) of the servo laser beam which are set in the second embodiment will be described.

Further, in Figs. 21(a) and 21(b), reciprocals ($1/\beta$-rp and $1/\beta$-sv) of the magnifications $\beta$ are used to show the range of each magnification $\beta$ corresponding to the range (0.05 mm to 0.3 mm) of the recording depth of the recording/reproducing laser beam.

In Fig. 21(a), the range of the magnification $\beta\_rp$ of the recording/reproducing laser beam corresponding to the range (= 0.05 mm to 0.3 mm) of the recording depth for this case is about -34.5 to 34.5 ($1/\beta\_rp$ = about -0.029 to about 0.029).

Further, in Fig. 21(b), the range of the magnification $\beta\_sv$ of the servo laser beam corresponding to the same range of the recording depth is about 125.0 to -50.0 ($1/\beta\_sv$ = about 0.008 to about -0.02).

From these set values of the respective magnifications $\beta$, it can be understood that the magnification $\beta\_sv$ of the servo laser beam also falls within the range of the magnification $\beta\_rp$ of the recording/reproducing laser beam even in the second embodiment. In addition, when the maximum amount of the surface wobbling is assumed to be D = 300 $\mu$m like the case of the first embodiment, it can be understood that [Expression 12] previously described is also satisfied by the second embodiment. That is, the second embodiment also can suppress the amount of the defocus $\Delta z$ of the recording/reproducing laser beam generated due to the surface wobbling during the recording operation to a very small value corresponding to the depth of focus or below.

Furthermore, although the second embodiment which has been described above uses an example in which, in order to suppress the comatic aberration of the recording/reproducing laser beam, the spherical aberration that is to be generated in the optical path between the recording/reproducing laser 11 and the objective lens 20 is generated by the fixed lens 50, the spherical aberration in the optical path between the recording/reproducing laser 11 and the objective lens 20 can be generated by other means such as a liquid crystal device, an expander, or the like.

<3. Third embodiment>

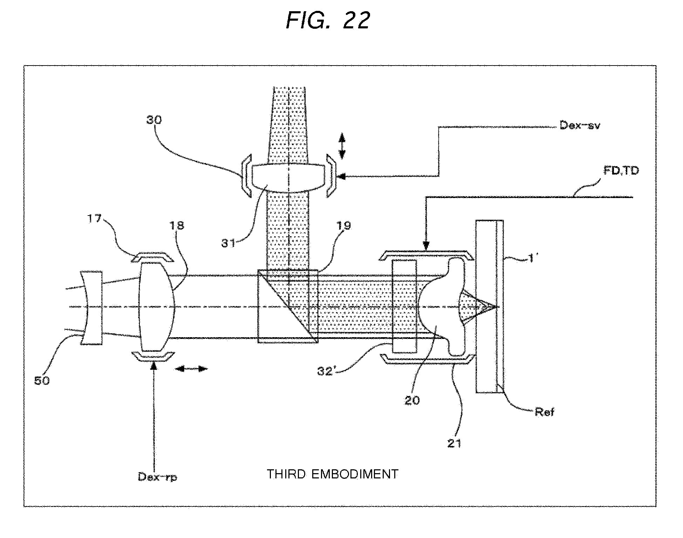

Fig. 22 is a diagram illustrating an extracted portion of an optical pickup OP included in an optical drive device (recording/reproducing device) as a third embodiment (and also illustrating a bulk-type recording medium 1) .
Further, like the case of the second embodiment, since structures of portions except for an optical pickup OP are similar to the case of the recording/reproducing device 10 of the first embodiment, those are not illustrated.
Furthermore, in the third embodiment, portions about which the description has been made already are denoted by the same reference symbols and the description thereof is not duplicated.

The recording/reproducing device of the third embodiment performs recording/reproduction on a bulk-type recording medium 1' in which a reference surface Ref is disposed on a far lower layer side than a bulk layer 5.

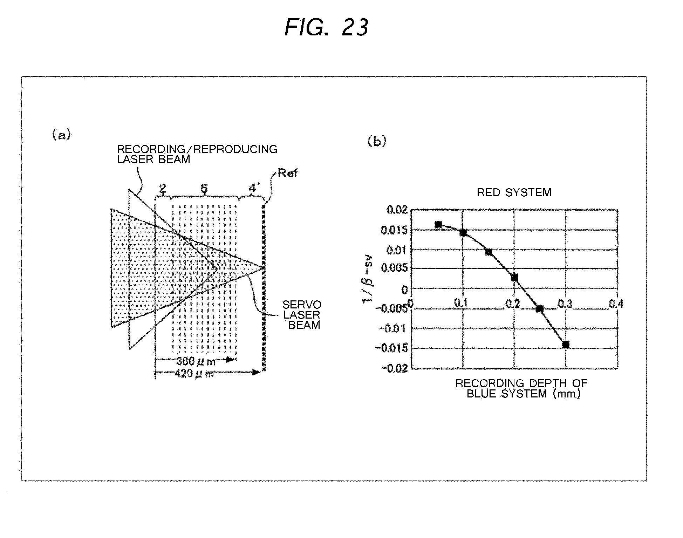

Fig. 23 (a) schematically illustrates a cross-sectional structure of the bulk-type recording medium 1'.
As illustrated in this Fig. 23 (a), in the bulk-type recording medium 1', the bulk layer 5 is formed as an underlying layer of a cover layer 2, and a reflection film with a reference surface Ref thereon is formed on the underside surface of the bulk layer 5 with an adhesive material as an intermediate layer 4' interposed therebetween.
Although not illustrated, the reference surface Ref in this case is formed by depositing the reflection film on a substrate with, for example, a series of pits or a groove serving as a position director formed thereon. On the substrate on which the reflection is deposited in such a way, the bulk layer 5 is formed (bonded) with the intermediate 4' interposed between them.
Herein, in this case, the reflection film with the reference surface Ref may not necessarily have wavelength selectivity. It is to be noted for confirmation that, in the present example, because there is a sufficiently big difference between a wavelength (405 nm) of a recording/reproducing laser beam and a wavelength (650 nm) of a servo laser beam, the effect (for example, deterioration of recording performance, or the like) of an operation that the servo laser beam passes through the bulk layer 5 is very weak.

As illustrated in Fig. 23 (a), the reference surface Ref of this case is set to a point which is at a depth of 420 $\mu$m from the surface of the bulk-type recording medium 1'.
In addition, the lowermost information recording layer position L in the bulk layer 5 is also set to a point which is at a depth of 300 $\mu$m from the surface in this case.

Here, in the recording/reproducing device of the third embodiment in which the servo laser beam is to be focused on the reference surface Ref formed in a layer on the relatively lower layer side in the bulk layer 5, a DOE 32' which has a function of selectively diverging the luminous flux of the servo laser beam is provided, instead of the DOE 32 which has a function of selectively converging the luminous flux of the servo laser beam (see Fig. 22).
This is because an improvement in a visual field swing tolerance of the servo laser beam is achieved by diverging the luminous flux of the servo laser beam that enters an objective lens 20, contrary to the cases of the first and second embodiments, when the reference surface Ref is formed on a lower side in the bulk layer 5.

In order to impart a function of diverging the servo laser beam to the DOE 32', settings (a formed pitch and a formed pattern) of a concave-convex pattern of the DOE 32' have to be different from the settings of the concave-convex pattern of the DOE 32. Specifically, as for the concave-convex pattern of the DOE 32', the formed pitch and the formed pattern (including a setting of a depth d of one step) are set such that the luminous flux of the servo laser beam can be selectively diverged by a predetermined amount.

Fig. 23(b) is a diagram to describe an example of a setting of the magnification $\beta\_sv$ of the servo laser beam in the recording/reproducing device of the third embodiment. Specifically, Fig. 23(b) illustrates a range of the magnification $\beta\_sv$ corresponding to a recording depth of 0.05 mm to 0.3 mm of the recording/reproducing laser beam, with reciprocals of the magnifications $\beta\_sv$.

Here, the range of the magnification $\beta\_rp$ of the recording/reproducing laser beam is not illustrated for a reason that the range of the magnification $\beta\_rp$ of this case is the same as that of the second embodiment.

Moreover, in the third embodiment, the refractive index of the objective lens 20 includes a refractive index (=1.78007) with respect to the recording/reproducing laser beam (405 nm) and a refractive index (= 1.75035) with respect to the servo laser beam (660 nm). Moreover, the WD is set to 0.4288 mm to 0.4739 mm.

As illustrated in Fig. 23(b), in the third embodiment, the magnification $\beta\_sv$ corresponding to the range of a recording depth of 0.05 mm to 0.3 mm is assumed to be set to 62.5 to -71.4 (1/$\beta\_sv$ = about 0.016 to about -0.014). It can be understood that the range of this magnification $\beta\_sv$ is within the range (about -34.5 to 34.5) of the magnification $\beta\_rp$.

Even in the third embodiment, for the maximum amount of the surface wobbling D = 300 $\mu$m, the previous [Expression 12] is satisfied.

<4. Fourth embodiment>

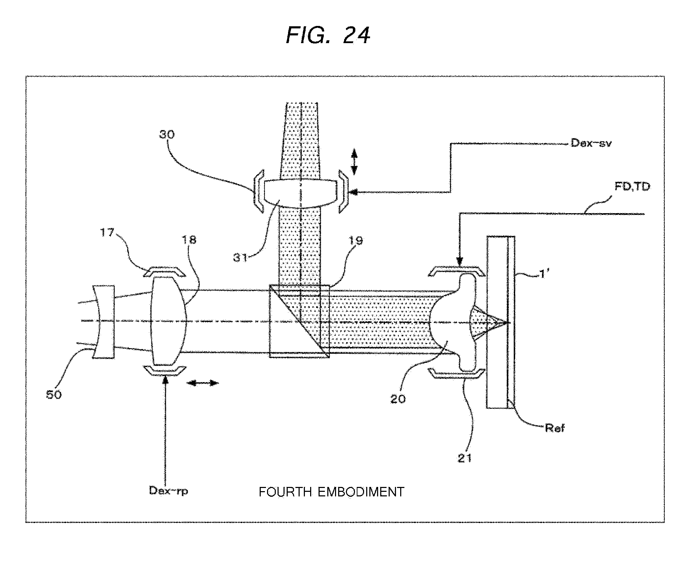

Fig. 24 is a diagram illustrating an extracted portion of an optical pickup OP included in an optical drive device (a recording/reproducing device) of a fourth embodiment (and also illustrating a bulk-type recording medium 1).
Further, even in the fourth embodiment, since structures of portions except for an optical pickup OP are similar to the case of the recording/reproducing device 10 of the first embodiment, the description based on illustration is not given.
Furthermore, even in the fourth embodiment, portions about which the description has been made already are denoted by the same reference symbols and the description thereof is not duplicated.
Like the third embodiment, the fourth embodiment is to record/reproduce in a bulk-type recording medium 1', serving as a recording target, in which a reference surface Ref is formed in a lower layer side in a bulk layer 5, but is different from the case of the third embodiment in the point that the DOE 32' is not provided.
Here, regarding a refractive index of an objective lens 20, an example in which a focusing position of a servo laser beam is formed in an interior side (a lower layer side) compared to a focusing position of a recording/reproducing laser beam is described in previous Fig. 13. If this is the case, when the reference surface Ref is formed in a layer lower than the bulk layer 5, in order to make the magnification $\beta\_sv$ fall within the range of the magnification $\beta\_rp$, it is unnecessary to especially install a DOE 32' which diverges luminous flux of the servo laser beam like the third embodiment.
From this point of view, the DOE 32' provided for the recording/reproducing device of the third embodiment is not provided for the recording/reproducing device of the fourth embodiment.

<5. Modification>

The embodiments of the present invention have been described so far, but the present invention is not limited to specific examples which have been described above.
For example, regarding set values of the magnifications $\beta$, they are not limited to the examples presented above, but the magnifications $\beta$ may be appropriately selected according to actual embodiments within the range of the present invention.
Further, although an example in which the number of the information recording layer positions L set within the bulk layer 5 is 20 has been described, the number of the information recording layer positions L is not limited thereof.
Furthermore, in the description which has been made so far, the focus control of the recording/reproducing laser beam during a reproduction operation is achieved by controlling the objective lens 20 based on the reflected light emitted from the mark train recorded with use of the recording/reproducing laser beam. However, during the reproduction operation, like in a recording operation, the focus control of the objective lens 20 can be performed based on the reflected light emitted from the reference surface Ref of the servo laser beam, and the focus control of the recording/reproducing laser beam can be performed by using a recording/reproducing light focus mechanism 15.
Here, when the focus control during the reproduction operation is performed like in the recording operation, there is a concern that the focusing position of the recording/reproducing laser beam is shifted from the recorded mark train due to the defocus $\Delta z$ corresponding to the surface wobbling during the reproduction operation, and therefore the information reproduction cannot be correctly performed. However, according to the magnification $\beta\_rp$ and the magnification $\beta\_sv$ as the present embodiment which are set based on [Expression 12] previously presented, like the recording operation the defocus $\Delta z$ can be suppressed to a very small value such as the depth of focus or below (that is, such that a state in which the recording/reproducing laser beam is focused on the mark train as a reproduction target can be maintained), information reproduction can be appropriately performed regardless of the surface wobbling.
Moreover, although the description has been made so far in connection with the case in which the bulk-type recording medium 1 (or 1') having a recording layer (a bulk-like recording layer), in which no position directors or no reflection films having such position directors are provided, is used as a target of recording/reproduction, the present invention can be appropriately applied to a case where the target is an optical recording medium (referred to as a multilayer optical recording medium) provided with a recording layer having a multilayer structure where a recording film (a semi-transmissive recording film) is formed in each of a plurality of layer positions as the recording layer.
Specifically, a position director formed as a series of pits, a groove, or the like is not formed in the recording film formed in the recording layer of the multilayer optical recording medium, and this aspect can lead to a simplified manufacturing process of the recording medium and a decrease in the manufacturing cost.
Even when recording in this kind of multilayer optical recording medium is performed, the tracking servo control of the recording/reproducing laser beam is performed by controlling the position of the objective lens 20 such that the focal position of the servo laser beam follows the position director formed in the reference surface Ref based on the reflected light emitted from the reference surface Ref of the servo laser beam.

Moreover, in this case, since it is possible to obtain the reflected light of the recording/reproducing laser beam from the recording film at the time of recording, the focus servo control of the recording/reproducing laser beam at the time of recording also can be performed based on the reflected light of the recording/reproducing laser beam.

Further, the description has been made so far, by way of example, in connection with the technique that provides the dichroic prism 19 and conducts spectroscopy by using a difference in wavelength between the reflected lights of the recording/reproducing laser beam and the servo laser beam when the lights are independently received by the device. However, alternatively, spectroscopy can be performed by other techniques, for example, adopting a structure which uses a difference in polarization direction, such as p-polarization/s-polarization.

Moreover, the description has been made so far, by way of example, in connection with a structure in which recording light for use in recording in the recording layer and reproduction light for use in reproducing signals recorded in the recording layer are obtained from the same light source (recording/reproducing laser 11). However, a different structure which a light source for the recording light and a light source for the reproducing light are separately provided also can be used.

Moreover, the description has been made so far, by way of example, in connection with the case in which the present invention is applied to the recording/reproducing device which performs both of the mark recording on the recording layer and reproduction of the recorded marks. However, the present invention also may be appropriately applied to a recording device (a recording-only device) which performs mark recording on the recording layer, a reproducing device (a reproducing-only device) which only performs reproduction of the recorded marks.

REFERENCE SIGNS LIST

| 1, 1' | Bulk-type recording medium |
|---|---|
| 2 | Cover layer |
| 3 | Selective reflection film |
| Ref | Reference surface |
| 4, 4' | Intermediate layer |
| 5 | Bulk layer |
| L | Information recording layer position |
| OP | Optical pickup |
| 10 | Recording/reproducing device |
| 11 | Recording/reproducing laser |
| 12, | 25 Polarizing beam splitter |
| 13, | 26 Quarter wavelength plate |
| 14, | 27 Collimating lens |
| 15 | Recording/reproducing light focus mechanism |
| 16, 28 | Concave lens |
| 17, 30 | Lens driving unit |
| 18, 31 | Convex lens |
| 19 | Dichroic prism |
| 20 | Objective lens |
| 21 | Biaxial actuator |
| 22, 33 | Cylindrical lens |
| 23 | Recording/reproducing light receiving unit |
| 24 | Servo laser |
| 32, 32' | DOE |
| 34 | Servo light receiving unit |
| 35 | Recording processing unit |
| 36 | Recording/reproducing matrix circuit |
| 37 | Reproduction processing unit |
| 38 | Recording/reproducing light servo circuit |
| 39 | Servo light matrix circuit |
| 40 | Position information detecting unit |
| 41 | Servo light servo circuit |
| 42 | Controller |
| 50 | Fixed lens |

**Claims**

1. An optical pickup comprising:

an optical system that includes an objective lens that irradiates an optical recording medium with a first light for use in information recording or information reproduction in or from a recording layer and a second light different from the first light, and a first focusing position adjusting unit that adjusts a focusing position of the first light having passed through the objective lens by changing collimation of the first light entering the objective lens, the optical recording medium including a reference surface provided with a reflection film in which a position director is formed in a spiral form or a concentric circular form, and the recording layer which is provided in a layer position different from the reference surface and in which a mark corresponding to irradiation of light is formed and hence information is recorded;
a focus mechanism of the objective lens; and
a tracking mechanism of the objective lens, wherein
the optical system is designed such that, regarding a magnification of the second light defined as a ratio of a distance between a position of an object point of the second light viewed from the objective lens and a principal plane of the objective lens with respect to a distance between the principal plane of the objective lens and a focusing position of the second light, and a magnification of the first light defined as a ratio of a distance between a position of an object point of the first light viewed from the objective lens and the principal plane of the objective lens with respect to a distance between the principal plane of the objective lens and the focusing position of the first light, the magnification of the second light falls within a magnification range of the first light determined in accordance with a focusing position adjustable range adjusted by the first focusing position adjusting unit.

2. The optical pickup according to claim 1, wherein
the first light enters the objective lens as converging light in a state in which the focusing position of the first light has been adjusted to an upper-limit layer position within the recording layer by the first focusing position adjusting unit, and the first light enters the objective lens as diverging light in a state in which the focusing position of the first light has been adjusted to a lower-limit layer position within the recording layer by the first focusing position adjusting unit.

3. The optical pickup according to claim 2, wherein
the optical system further includes a second focusing position adjusting unit that adjusts the focusing position of the second light having passed through the objective lens by changing collimation of the second light entering the objective lens.

4. The optical pickup according to claim 3, wherein
the reference surface is provided in an upper layer side in the recording layer within the optical recording medium, and the optical system further includes a diffraction-type optical element that converges luminous flux of the second light entering the objective lens (20) to a predetermined extent.

5. The optical pickup according to claim 4, wherein
the tracking mechanism collectively drives the objective lens and the diffraction-type optical element.

6. The optical pickup according to claim 3, wherein
when a depth of focus $\lambda/NA^2$ of the first light determined by a wavelength $\lambda$ of the first light and a numerical aperture NA of the first light is defined as $\alpha$, and an absolute value of a maximum surface wobbling amount of the optical recording medium is defined as D, the optical system is designed such that the magnification $\beta_1$ of the first light and the magnification $\beta_2$ of the second light satisfy Expression 13.

[Expression 13]

$$\frac{1}{\beta_1{}^2}\left(1+\frac{1}{\beta_2{}^2}\right)D \leqq \alpha$$

7. An optical drive device comprising:

an optical pickup including an optical system, a focus mechanism of an objective lens, and a tracking mechanism of the objective lens, the optical system including the objective lens that irradiates an optical recording medium with a first light for use in information recording or information reproduction in or from a recording layer and a second light different from the first light, and a first focusing position adjusting unit that adjusts a focusing position of the first light having passed through the objective lens by changing collimation of the first light entering the objective lens, the optical recording medium including a reference surface provided with a reflection film in which a position director is formed in a spiral form or a concentric circular form, and the recording layer which is provided in a layer position different from the reference surface and in which a mark corresponding to irradiation of light is formed and hence information is recorded, wherein, the optical system is designed such that, regarding a magnification of the second light defined as a ratio of a distance between a position of an object point of the second light viewed from the objective lens and a principal plane of the objective lens with respect to a distance between the principal plane of the objective lens and a focusing position of the second light, and a magnification of the first light defined as a ratio of a distance between a position of an object point of the first light viewed from the objective lens and the principal plane of the objective lens with respect to a distance between the principal plane of the objective lens and the focusing position of the first light, the magnification of the second light falls within a magnification range of the first light determined in accordance with a focusing position adjustable range adjusted by the first focusing position adjusting unit;
a focus servo control unit that controls the focus mechanism based on reflected light of the second light reflected from the reference surface such that the focusing position of the second light moves along on the reference surface;
a tracking servo control unit that controls the tracking mechanism based on the reflected light of the second light reflected from the reference surface such that the focusing position of the second light follows the position director on the reference surface; and
a focusing position setting control unit that controls setting of the focusing position of the first light by controlling the first focusing position adjusting unit.

8. A light irradiation method in an optical pickup including an optical system, a focus mechanism of an objective lens, and a tracking mechanism of the objective lens, the optical system including the objective lens that irradiates an optical recording medium with a first light for use in information recording or information reproduction in or from a recording layer and a second light different from the first light, and a first focusing position adjusting unit that adjusts a focusing position of the first light having passed through the objective lens by changing collimation of the first light entering the objective lens, the optical recording medium including a reference surface provided with a reflection film in which a position director is formed in a spiral form or a concentric circular form, and the recording layer which is provided in a layer position different from the reference surface and in which a mark corresponding to irradiation of light is formed and hence information is recorded, the method comprising:

irradiating the optical recording medium with light using the optical system designed such that, regarding a magnification of the second light defined as a ratio of a distance between a position of an object point of the second light viewed from the objective lens and a principal plane of the objective lens with respect to a distance between the principal plane of the objective lens and a focusing position of the second light, and a magnification of the first light defined as a ratio of a distance between a position of an object point of the first light viewed from the objective lens and the principal plane of the objective lens with respect to a distance between the principal plane of the objective lens and the focusing position of the first light, the magnification of the second light falls within a magnification range of the first light determined in accordance with a focusing position adjustable range adjusted by the first focusing position adjusting unit.

## FIG. 1

## FIG. 2

## FIG. 3

FIG. 4

RECORDING DATA → [35 RECORDING PROCESSING UNIT] ── RCP ──→ ▯ ～ 11

REPRODUCTION DATA ←

DT-rp → [36 RECORDING/ REPRODUCING LIGHT MATRIX CIRCUIT] ── RF ──→ [37 REPRODUCTION PROCESSING UNIT]

TE-rp → FE-rp → [38 RECORDING/ REPRODUCING LIGHT SERVO CIRCUIT]

FD-rp(DURING REPRODUCTION)
TD-rp(DURING REPRODUCTION)

[21 BIAXIAL ACTUATOR]

DT-sv → [39 SERVO LIGHT MATRIX CIRCUIT]

FE-sv → [41 SERVO LIGHT SERVO CIRCUIT]

FD-sv(DURING RECORDING)
TD-sv(DURING RECORDING)

Dps → [40 POSITION INFORMATION DETECTING UNIT]

TE-sv →

42 ～ [CONTROLLER]

Dex-sv

[30 LENS DRIVING UNIT]

Dex-rp

OP ～ [17 LENS DRIVING UNIT]

10

# FIG. 5

# FIG. 6

# FIG. 7

(a)

$n_0=1$

Nd

d

$n=N$

(b)

$n_0=1$

1.2272

0.6136

1 step : 405nm/(N-1)

d

N

1 CYCLE

# FIG. 8

## FIG. 9

## FIG. 10

## FIG. 11

(a)

SURFACE WOBBLING 300μm

| LAYER POSITION [μm] | $\beta$_sv | $\delta$ z_sv | $\beta$_rp | $\Delta$z |
|---|---|---|---|---|
| 300 | −58.902 | −0.086 | 43.868 | 0.156 |
| 250 | −109.832 | −0.025 | 85.022 | 0.041 |
| 200 | −474.616 | −0.001 | −1339.124 | 0.000 |
| 150 | 268.479 | 0.004 | −66.318 | −0.068 |
| 100 | 132.336 | 0.017 | −30.884 | −0.315 |

(b)

LENS SHIFT 100μm

| LAYER POSITION [μm] | $\beta$_sv | $\delta$ x_sv | $\beta$_rp | $\delta$ x_rp | $\Delta$x |
|---|---|---|---|---|---|
| 300 | −58.902 | −1.698 | 43.868 | 2.280 | 3.978 |
| 250 | −109.832 | −0.910 | 85.022 | 1.176 | 2.086 |
| 200 | −474.616 | −0.211 | −1339.124 | −0.075 | 0.136 |
| 150 | 268.479 | 0.372 | −66.318 | −1.508 | 1.880 |
| 100 | 132.336 | 0.756 | −30.884 | −3.238 | 3.994 |

## FIG. 12

(a)

SURFACE WOBBLING 300μm

| MAGNIFICATION $\beta\_sv$ | $\delta z\_sv$ | MAGNIFICATION $\beta\_rp$ | $\Delta z$ |
|---|---|---|---|
| -10 | 3 | 30 | 0.337 |
| -10 | 3 | -43 | -0.164 |

(b)

LENS SHIFT 100μm

| MAGNIFICATION $\beta\_sv$ | $\delta x\_sv$ | MAGNIFICATION $\beta\_rp$ | $\delta x\_rp$ | $\Delta x$ |
|---|---|---|---|---|
| -10 | -10 | 30 | 3.33 | 13.33 |
| -10 | -10 | -43 | -2.33 | 7.67 |

## FIG. 13

20

SERVO LASER BEAM

RECORDING/REPRODUCING
LASER BEAM

*FIG. 14*

SECOND EMBODIMENT

# FIG. 15

## FIG. 16

# FIG. 17

## FIG. 18

*FIG. 19*

## FIG. 20

## FIG. 21

(a)

BLUE SYSTEM

(b)

RED SYSTEM

# FIG. 22

THIRD EMBODIMENT

FIG. 23

(a)

RECORDING/REPRODUCING
LASER BEAM

2    5    4'    Ref

SERVO
LASER
BEAM

300 μm
420 μm

(b)

RED SYSTEM

1/β −sv

RECORDING DEPTH OF
BLUE SYSTEM (mm)

## FIG. 24

FOURTH EMBODIMENT

## FIG. 25

LASER BEAM
101
102

## FIG. 26

(a) LUMINOUS FLUX A

LUMINOUS FLUX B

POSITIVE-TYPE MICRO-HOLOGRAM

(b) LUMINOUS FLUX A

NEGATIVE-TYPE MICRO-HOLOGRAM

# FIG. 27

(a)

C

101

102

D

(b)

101

102

*FIG. 28*

# FIG. 29

☐ RECORDING/REPRODUCING LASER BEAM

▨ SERVO LASER BEAM

OBJECTIVE LENS

Ref

101
103
104
L1
L2
L3
L4
L5
102

100

DURING RECORDING

# FIG. 30

RECORDING/
REPRODUCING
LASER BEAM

SERVO LASER BEAM

RECORDING/
REPRODUCING
LIGHT FOCUS
MECHANISM
(EXPANDER)

LENS
DRIVING
UNIT

DICHROIC PRISM

MIRROR

OBJECTIVE
LENS

BIAXIAL ACTUATOR

Ref

100

# FIG. 31

RECORDING／
REPRODUCING
LASER BEAM

SERVO LASER
BEAM

OBJECTIVE
LENS

104 Ref

L1

FIRST MARK-
FORMING
LAYER: FIRST
INFORMATION
RECORDING
LAYER

L2
L3
L4
L5

101
103
102

DURING REPRODUCTION

100

# FIG. 32

## INTERNATIONAL SEARCH REPORT

| International application No. |
|---|
| PCT/JP2011/057484 |

A.   CLASSIFICATION OF SUBJECT MATTER
*G11B7/135*(2006.01)i, *G11B7/09*(2006.01)i, *G11B7/125*(2006.01)i

According to International Patent Classification (IPC) or to both national classification and IPC

B.   FIELDS SEARCHED

Minimum documentation searched (classification system followed by classification symbols)
G11B7/135, G11B7/09, G11B7/125

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | WO 2008/099708 A1  (Sanyo Electric Co., Ltd.), 21 August 2008 (21.08.2008), entire text; fig. 8 & US 2009/0316537 A1    & CN 101611445 A | 1-8 |
| A | JP 2008-97694 A  (Hitachi Maxell, Ltd.), 24 April 2008 (24.04.2008), entire text; fig. 1 (Family: none) | 1-8 |
| P,A | JP 2011-48873 A  (Sony Corp.), 11 March 2011 (11.03.2011), entire text; all drawings (Family: none) | 1-8 |

☐   Further documents are listed in the continuation of Box C.      ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 June, 2011 (14.06.11) | 28 June, 2011 (28.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 555 196 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008135144 A
- JP 2008176902 A